(19) Europäisches Patentamt
European Patent Office
Office européen des brevets

(11) **EP 4 568 361 A1**

(12) **EUROPEAN PATENT APPLICATION**
published in accordance with Art. 153(4) EPC

(43) Date of publication:
**11.06.2025 Bulletin 2025/24**

(21) Application number: **23850486.4**

(22) Date of filing: **04.08.2023**

(51) International Patent Classification (IPC):
**H04W 52/02** (2009.01)  **H04B 7/06** (2006.01)
**H04W 56/00** (2009.01)  **H04W 72/23** (2023.01)
**H04W 74/08** (2024.01)  **H04W 24/08** (2009.01)
**H04W 76/28** (2018.01)  **H04B 7/08** (2006.01)

(52) Cooperative Patent Classification (CPC):
**H04B 7/06; H04B 7/08; H04W 24/08; H04W 52/02;
H04W 56/00; H04W 72/23; H04W 74/08;
H04W 76/28;** Y02D 30/70

(86) International application number:
**PCT/KR2023/011474**

(87) International publication number:
**WO 2024/029986 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.08.2022 KR 20220098094
28.09.2022 KR 20220123818
03.11.2022 KR 20220145556**

(71) Applicant: **LG Electronics Inc.
Yeongdeungpo-gu
Seoul 07336 (KR)**

(72) Inventors:
• **KIM, Seonwook**
  Seoul 06772 (KR)
• **LEE, Youngdae**
  Seoul 06772 (KR)
• **YANG, Suckchel**
  Seoul 06772 (KR)
• **KO, Hyunsoo**
  Seoul 06772 (KR)
• **PARK, Haewook**
  Seoul 06772 (KR)

(74) Representative: **Mooser, Sebastian Thomas
Wuesthoff & Wuesthoff
Patentanwälte und Rechtsanwalt PartG mbB
Schweigerstraße 2
81541 München (DE)**

(54) **DEVICE AND METHOD FOR TURNING ON/OFF SYNCHRONIZATION SIGNAL AND BROADCAST CHANNEL SIGNAL IN WIRELESS COMMUNICATION SYSTEM**

(57) The present disclosure is related to turn on/off a synchronization signal/physical broadcast channel block in a wireless communication system, a method of operating a terminal may comprise receiving downlink control information (DCI) related to system information, obtaining allocation information for receiving the system information based on the DCI, receiving the system information based on the allocation information, obtaining first information related to positions of synchronization signal/physical broadcast channel blocks (SSBs) included in the system information, receiving second information related to on or off of the SSBs, and receiving at least one of the SSBs based on the first information and the second information.

FIG. 12

EP 4 568 361 A1

**Description**

**Technical Field**

The following description relates to a wireless communication system, and to a device and method for turning on/off a synchronization signal/broadcast channel signal in a wireless communication system.

**Background Art**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

**Disclosure**

**Technical Problem**

The present disclosure can provide a device and method for turning on/off a synchronization signal/broadcast channel signal in a wireless communication system.

The present disclosure can provide a device and method for dynamically turning on/off at least one SSB (synchronization signal/physical broadcast channel block) in a wireless communication system.

The present disclosure can provide a device and method for dynamically signaling on/off for at least one SSB in a wireless communication system.

The present disclosure can provide a device and method for mapping a bit indicating on/off for at least one SSB and SSB index(es) in a wireless communication system.

The present disclosure can provide a device and method for performing a random access procedure based on an SSB that is dynamically turned on/off in a wireless communication system.

The present disclosure can provide a device and method for determining a RACH (random access channel) occasion based on an SSB that is dynamically turned on/off in a wireless communication system.

The present disclosure can provide a device and method for controlling a random access response (RAR) window based on an SSB that is dynamically turned on/off in a wireless communication system.

The present disclosure can provide a device and method for determining a PUSCH (physical uplink shared channel) occasion based on an SSB that is dynamically turned on/off in a wireless communication system.

The present disclosure can provide a device and method for determining a monitoring occasion (MO) of a physical downlink shared channel (PDCCH) based on an SSB that is dynamically turned on/off in a wireless communication system.

The present disclosure can provide a device and method for performing at least one of radio link monitoring (RLM), candidate beam detection (CBD), beam failure detection (BFD), or mobility management operation based on an SSB that is dynamically turned on/off in a wireless communication system.

The present disclosure can provide a device and method for controlling handover-related operations based on an SSB that is dynamically turned on/off in a wireless communication system.

The present disclosure can provide a device and method for configuring an SSB measurement timing configuration (SMTC) based on at least one of a capability of a terminal, a DRX configuration, or an active time of a base station in a wireless communication system.

The present disclosure can provide a device and method for setting SSB related parameters based on the NES (network energy saving) related capability of a terminal in a wireless communication system.

The present disclosure can provide a device and method for setting a handover related threshold based on the NES related capability of a terminal in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

**Technical Solution**

As an example of the present disclosure, a method of operating a terminal in a wireless communication system may comprise receiving downlink control information (DCI) related to system information, obtaining allocation information for receiving the system information based on the DCI, receiving the system information based on the allocation information, obtaining first information related to positions of synchronization signal/physical broadcast channel blocks (SSBs) included in the system information, receiving second information related to on or off of the SSBs, and receiving at least one of the SSBs based on the first information and the second information.

As an example of the present disclosure, a method of operating a base station in a wireless communication system may comprise transmitting downlink control information (DCI) related to system information, transmitting system information including first information related to positions of synchronization signal/physical broadcast channel blocks (SSBs) based on allocation information included in the DCI, transmitting second information related to on or off of the SSBs, and transmitting at least one of the SSBs based on the first information and the second information.

As an example of the present disclosure, a terminal in a wireless communication system may comprise a transceiver and a processor connected to the transceiver. The processor may receive downlink control information (DCI) related to system information, obtain allocation information for receiving the system information based on the DCI, receive the system information based on the allocation information, obtain first information related to positions of synchronization signal/physical broadcast channel blocks (SSBs) included in the system information, receive second information related to on or off of the SSBs, and receive at least one of the SSBs based on the first information and the second information.

As an example of the present disclosure, a base station in a wireless communication system may comprise a transceiver and a processor connected to the transceiver. The processor may transmit downlink control information (DCI) related to system information, transmit system information including first information related to positions of synchronization signal/physical broadcast channel blocks (SSBs) based on allocation information included in the DCI, transmit second information related to on or off of the SSBs, and transmit at least one of the SSBs based on the first information and the second information.

As an example of the present disclosure, a communication device may comprise at least one processor and at least one computer memory connected to the at least one processor and configured to store instructions that direct operations as executed by the at least one processor. The operations may comprise receiving downlink control information (DCI) related to system information, obtaining allocation information for receiving the system information based on the DCI, receiving the system information based on the allocation information, obtaining first information related to positions of synchronization signal/physical broadcast channel blocks (SSBs) included in the system information, receiving second information related to on or off of the SSBs, and receiving at least one of the SSBs based on the first information and the second information.

As an example of the present disclosure, a non-transitory computer-readable medium storing at least one instructions may comprise the at least one instructions executable by a processor. The at least one instruction may control a device to receive downlink control information (DCI) related to system information, obtain allocation information for receiving the system information based on the DCI, receive the system information based on the allocation information, obtain first information related to positions of synchronization signal/physical broadcast channel blocks (SSBs) included in the system information, receive second information related to on or off of the SSBs and receive at least one of the SSBs based on the first information and the second information.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

**Advantageous Effects**

As is apparent from the above description, the embodiments of the present disclosure have the following effects.

According to the present disclosure, the on/off of a synchronization signal/broadcast channel signal transmitted from a base station can be effectively controlled.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates the structure of an SSB (synchronization signal and broadcast channel block) applicable to the present disclosure.

FIG. 9 illustrates transmission of an SSB applicable to the present disclosure.

FIG. 10 illustrates examples of SSB candidate positions applicable to the present disclosure.

FIG. 11 illustrates an example of downlink time synchronization information applicable to the present disclosure.

FIG. 12 illustrates an example of a procedure for receiving an SSB (synchronization signal/physical broadcast channel block) in a wireless communication system according to an embodiment of the present disclosure.

FIG. 13 illustrates an example of a procedure for transmitting an SSB in a wireless communication system according to an embodiment of the present disclosure.

FIG. 14 illustrates an example of a procedure for receiving SSB on/off information in the form of a bitmap in a wireless communication system according to an embodiment of the present disclosure.

FIG. 15 illustrates an example of a procedure for transmitting a RACH preamble based on SSB on/off information in a wireless communication system according to an embodiment of the present disclosure.

FIG. 16 illustrates an example of a procedure for performing a RACH procedure based on SSB on/off in a wireless communication system according to an embodiment of the present disclosure.

FIG. 17 illustrates an example of a RACH procedure based on an SSB that is dynamically turned on/off in a wireless communication system according to an embodiment of the present disclosure.

FIG. 18 illustrates an example of a procedure for performing a designated operation based on SSB on/off information in a wireless communication system according to an embodiment of the present disclosure.

FIG. 19 illustrates an example of a procedure for controlling a PDCCH (physical downlink control channel) MO (monitoring occasion) based on SSB on/off information in a wireless communication system according to an embodiment of the present disclosure.

FIG. 20 illustrates an example of a procedure for measuring an SSB based on an SMTC in a wireless communication system according to an embodiment of the present disclosure.

FIG. 21 illustrates an example of a procedure for setting SSB-related parameters according to terminal capability in a wireless communication system according to an embodiment of the present disclosure.

FIG. 22 illustrates an example of a procedure for controlling a threshold related to mobility according to terminal capability in a wireless communication system according to an embodiment of the present disclosure.

### Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

## Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

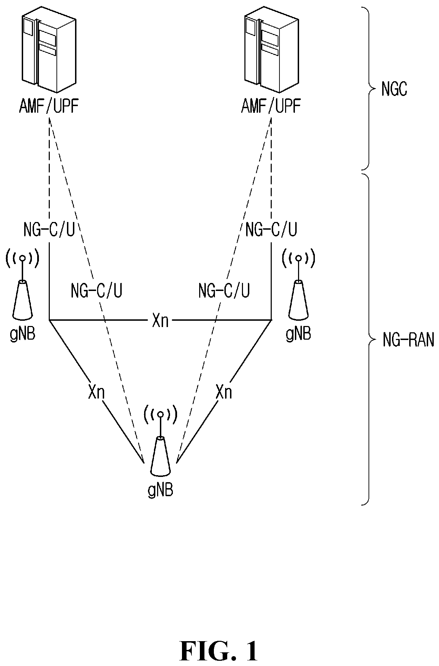

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

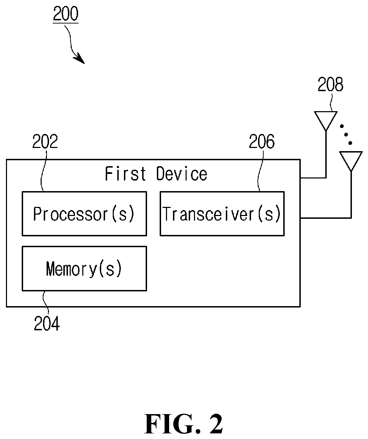

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

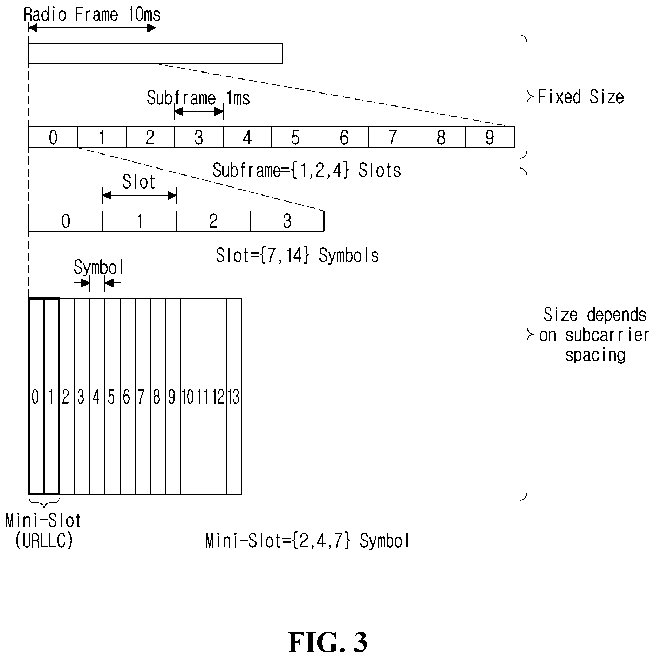

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} \cdot N_f/100)T_c = 10$ ms. Here, the radio frame is configured with 10 subframes having a duration of $T_{sf}=(\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA}=(N_{TA}+ N_{TA,offset})T_c$ than a corresponding downlink frame in a corresponding terminal starts. For a subcarrier spacing configuration $\mu$, slots are numbered in an increasing order of $n^{\mu}_{s} \in \{0,\cdots,N^{subframe,\mu}_{slot}-1\}$ in a subframe and are numbered in an increasing order of $n^{\mu}_{s,f} \in \{0,\cdots,N^{frame,\mu}_{slot}-1\}$ in a radio frame. One slot is configured with $N^{slot}_{symb}$ consecutive OFDM symbols and $N^{slot}_{symb}$ is determined according to CP. A start of a slot $n^{\mu}_{s}$ in a subframe is temporally arranged with a start of an OFDM symbol $n^{\mu}_{s}N^{slot}_{symb}$ in the same subframe. All terminals may not perform transmission and reception at the same time, which means that not all OFDM symbols of a downlink slot or an uplink slot are available.

Table 3 represents the number of OFDM symbols per slot ( $N^{slot}_{symb}$ ), the number of slots per radio frame ( $N^{frame,\mu}_{slot}$ ) and the number of slots per subframe ( $N^{subframe,\mu}_{slot}$ ) in a normal CP and Table 4 represents the number of OFDM symbols per slot, the number of slots per radio frame and the number of slots per subframe in an extended CP.

[Table 3]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols.

**EP 4 568 361 A1**

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

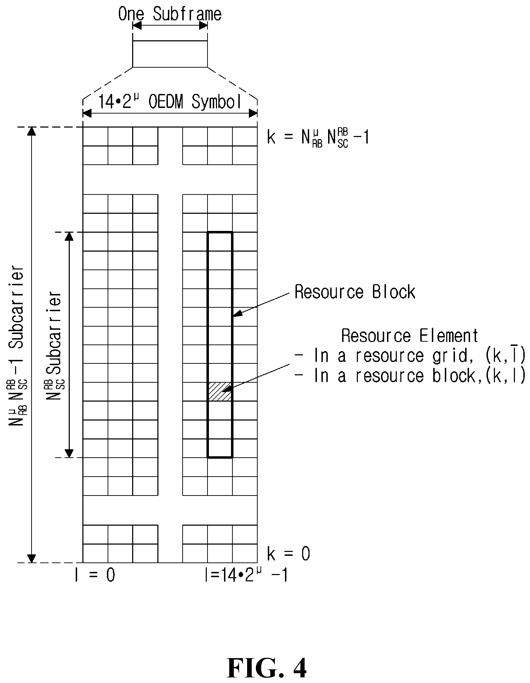

FIG. 4 exemplifies a resource grid in a wireless communication system to which the present disclosure may be applied.

Referring to FIG. 4, as an illustrative description, a resource grid is configured with $N_{RB}^{\mu} N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu} N_{symb}^{(\mu)}$ OFDM symbols and $N_{RB}^{\mu} N_{SC}^{RB}$ subcarriers. Here, $N_{RB}^{\mu} \leq N_{RB}^{max,u}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, $k=0, \ldots, N_{RB}^{\mu} N_{SC}^{RB}-1$ is an index in a frequency domain and $l'=0, \ldots, 2^{\mu} N_{symb}^{(\mu)}-1$ refers to a position of a symbol in a subframe. When referring to a resource element in a slot, an index pair (k, 1) is used. Here, $l=0, \ldots, 2^{\mu} N_{symb}^{(\mu)}-1$. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, 1) for a subcarrier spacing configuration $\mu$ in a frequency domain is given as in the following Equation 1.

[Equation 1]

$$n_{CRB}^{\mu} = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu} - 1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

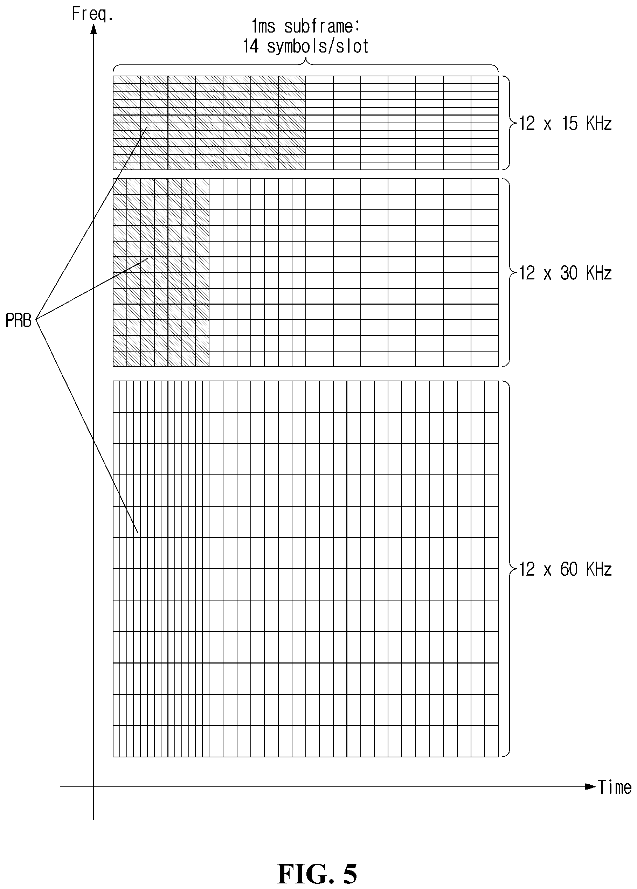

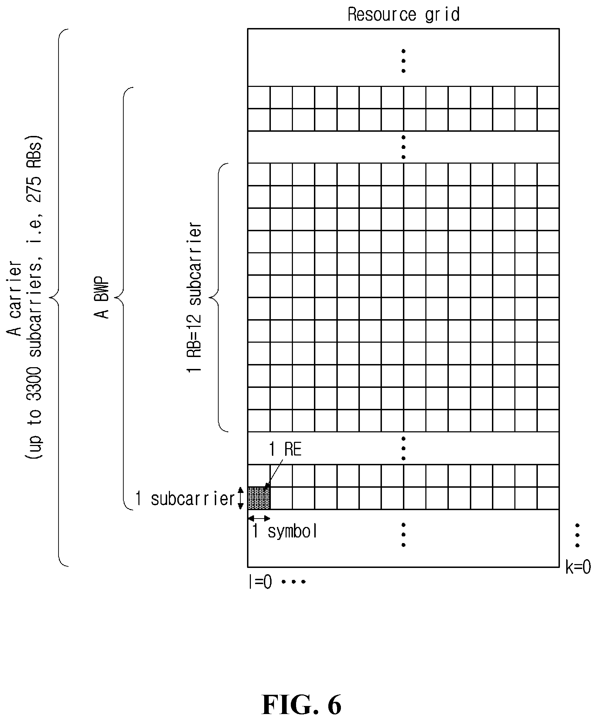

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

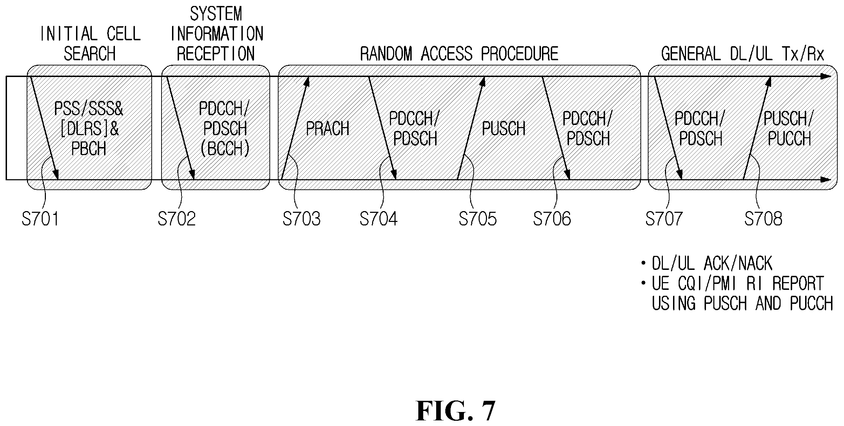

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

SSB (Synchronization Signal Block) transmission and related operation

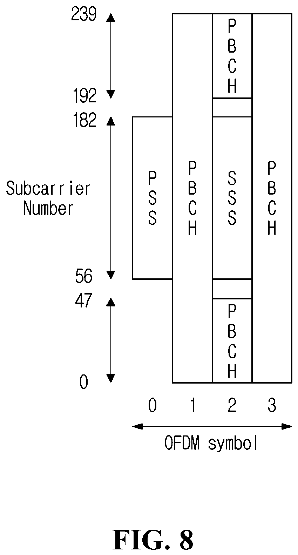

FIG. 8 illustrates the structure of an SSB (synchronization signal and broadcast channel block) applicable to the present disclosure. FIG. 8 illustrates an SSB structure. A terminal may perform cell search, system information acquisition, beam alignment for initial access, DL measurement, etc. based on an SSB. The SSB is used interchangeably with an SS/PBCH (Synchronization Signal/Physical Broadcast channel) block.

Referring to FIG. 8, the SSB is composed of a PSS, an SSS, and a PBCH. The SSB is composed of 4 consecutive OFDM symbols, and the PSS, PBCH, SSS/PBCH, and PBCH are transmitted for each OFDM symbol. The PSS and the SSS are each composed of 1 OFDM symbol and 127 subcarriers, and the PBCH is composed of 3 OFDM symbols and 576 subcarriers. Polar coding and QPSK (Quadrature Phase Shift Keying) are applied to the PBCH. The PBCH is composed of a data RE and a DMRS (Demodulation Reference Signal) RE for each OFDM symbol. There are 3 DMRS REs for each RB, and there are 3 data REs between DMRS REs.

Cell search

Cell search means a process in which a terminal acquires time/frequency synchronization of a cell and detects the cell ID (Identifier) (e.g., Physical layer Cell ID, PCID) of the cell. The PSS is used to detect a cell ID within a cell ID group, and the SSS is used to detect a cell ID group. The PBCH is used for SSB (time) index detection and half-frame detection.

The cell search process of the terminal may be summarized as shown in [Table 5] below.

[Table 5]

|  | Type of Signals | Operations |
|---|---|---|
| 1st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index(Slot and frame boundary detection) |
| 4th Step | PBCH | * Time information (80 ms, System Frame Number (SFN), SSB index, HF)* Remaining Minimum System Information (RMSI) Control resource set (CORESET)/Search space configuration |
| 5th Step | PDCCH and PDSCH | * Cell access information* RACH configuration |

There are 336 cell ID groups, and there are 3 cell IDs for each cell ID group. There are a total of 1008 cell IDs, and the cell ID may be defined by [Equation 3].

[Equation 3]

$$N_{ID}^{cell}=3N_{ID}^{(1)}+N_{ID}^{(2)} \quad where \; N_{ID}^{(1)}\in\{0,1,\cdots,335\} \; and \; N_{ID}^{(2)}\in\{0,1,2\}$$

] where, $N_{ID}^{cell}$ denotes a cell ID (e.g., PCID). $N_{ID}^{(1}$ denotes a cell ID group and is provided/obtained through an SSS.

$N_{ID}^{(2}$ denotes a cell ID within a cell ID group and is provided/obtained through a PSS.

A PSS sequence $d_{PSS}(n)$ may be defined to satisfy [Equation 4].

[Equation 4]

$$d_{PSS}(n)=1-2x(m)$$
$$m=(n+43N_{ID}^{(2)}) \bmod 127$$

where, $0\leq n<127$, $x(i+7)=(x(i+4)+x(i))\bmod2$, and [x(6) x(5) x(4) x(3) x(2) x(1) x(0)]=[1 1 1 0 1 1 0].
An SSS sequence $d_{SSS}(n)$ may be defined to satisfy [Equation 5].

[Equation 5]

$$d_{SSS}(n)=[1-2x_0((n+m_0)\bmod127)][1-2x_1((n+m_1)\bmod127)]$$
$$m_0=15\lfloor\frac{N_{ID}^{(1)}}{112}\rfloor+5N_{ID}^{(2)}$$
$$m_1=N_{ID}^{(1)}\bmod112$$

where, $0\leq n<127$, $x_0(i+7)=(x_0(i+4)+x_0(i))\bmod2$, $x_1(i+7)=(x_1(i+1)+x_1(i))\bmod2$, [$x_0$(6) $x_0$(5) $x_0$(4) $x_0$(3) $x_0$(2) $x_0$(1) $x_0$(0)]=[0 0 0 0 0 0 1], and [$x_1$(6) $x_1$(5) $x_1$(4) $x_1$(3) $x_1$(2) $x_1$(1) $x_1$(0)]=[0 0 0 0 0 0 1].

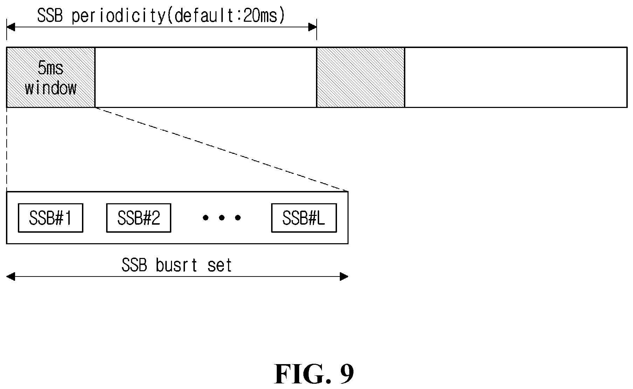

FIG. 9 illustrates transmission of an SSB applicable to the present disclosure. The SSB is transmitted periodically according to the SSB periodicity. The SSB basic period assumed by the terminal during initial cell search is defined as 20 ms. After cell access, the SSB may be set to one of {5 ms, 10 ms, 20 ms, 40 ms, 80 ms, 160 ms} by the network (e.g., base station). An SSB burst set is configured at the beginning of the SSB period. The SSB burst set consists of a 5-ms time window (i.e., half-frame), and an SSB may be transmitted at most L times within the SSB burst set. The maximum number of SSB transmissions L may be given as follows depending on the frequency band of the carrier One slot includes at most two SSBs.

- For frequency range up to 3 GHz, L = 4
- For frequency range from 3GHz to 6 GHz, L = 8
- For frequency range from 6 GHz to 52.6 GHz, L = 64

The temporal position of a candidate SSB within an SSB burst set may be defined as follows according to the SCS. The temporal position of a candidate SSB is indexed from 0 to L-1 (SSB index) in time order within the SSB burst set (i.e., half-frame). Candidate SSB and SSB candidate are used interchangeably in the specification.

- Case A - 15 kHz SCS: The index of the starting symbol of the candidate SSB is given as {2, 8} + 14*n.
- For operation without shared spectrum channel access (e.g., L-band, LCell): If the carrier frequency is 3 GHz or less, n = 0, 1. If the carrier frequency is 3 GHz to 6 GHz, n = 0, 1, 2, 3.
- For operation with shared spectrum channel access (e.g., U-band, UCell): n=0, 1, 2, 3, 4.
- Case B - 30 kHz SCS: The index of the starting symbol of the candidate SSB is given as {4, 8, 16, 20} + 28*n. If the carrier frequency is 3 GHz or less, n=0. If the carrier frequency is 3 GHz to 6 GHz, n=0, 1.
- Case C - 30 kHz SCS: The index of the starting symbol of the candidate SSB is given as {2, 8} + 14*n.
- For operation without shared spectrum channel access: (1) For paired spectrum operation, when the carrier frequency is 3 GHz or less, n=0, 1. When the carrier frequency is within FR1 and greater than 3 GHz, n=0, 1, 2, 3. (2) For non-paired spectrum operation, when the carrier frequency is 2.4 GHz or less, n=0, 1. When the carrier frequency is within FR1 and greater than 2.4 GHz, n=0, 1, 2, 3.

- For operation without shared spectrum channel access: n=0, 1, 2, 3, 4, 6, 7, 8, 9.
- Case D - 120 kHz SCS: The index of the starting symbol of the candidate SSB is given as {4, 8, 16, 20} + 28*n. For carrier frequencies within FR2, n=0, 1, 2, 3, 5, 6, 7, 8, 10, 11, 12, 13, 15, 16, 17, 18.
- Case E - 240 kHz SCS: The index of the starting symbol of the candidate SSB is given as {8, 12, 16, 20, 32, 36, 40, 44} + 56*n. For carrier frequencies within FR2, n=0, 1, 2, 3, 5, 6, 7, 8.

For operation with shared spectrum channel access, in the case of a shared spectrum channel access operation, the terminal assumes that the SSB transmission within a half-frame is within a discovery burst transmission window starting from the first symbol of the first slot within the half-frame. The terminal may be provided with a discovery burst transmission window period for each serving cell. If the discovery burst transmission window period is not provided, the terminal regards the discovery burst transmission window period as a half-frame. For each serving cell, the terminal assumes that the repetition period of the discovery burst transmission window is the same as the repetition period of the half-frame for SSB reception. The terminal may assume that among the SSBs of the serving cell, SSB(s) having the same $\left(N_{DM\text{-}RS}^{PBCH} \bmod N_{SSB}^{QCL}\right)$ value within the same discovery burst transmission window or across different discovery burst transmission windows are in a QCL (co-located) relationship. $N_{DM\text{-}RS}^{PBCH}$ represents the DM-RS sequence index of the PBCH of SSB, and $N_{SSB}^{QCL}$ is (i) provided by ssbPositionQCL-Relationship, or (ii) if ssbPositionQCL-Relationship is not provided, may be obtained from the MIB (master information block) of the SSB based on [Table 6].

[Table 6]

| subCarrierSpacingCommon | [LSB of ssb-SubcarrierOffset] | $N_{SSB}^{QCL}$ |
|---|---|---|
| scs 15 or 60 | 0 | 1 |
| scs 15 or 60 | 1 | 2 |
| scs 30 or 120 | 0 | 4 |
| scs 30 or 120 | 1 | 8 |

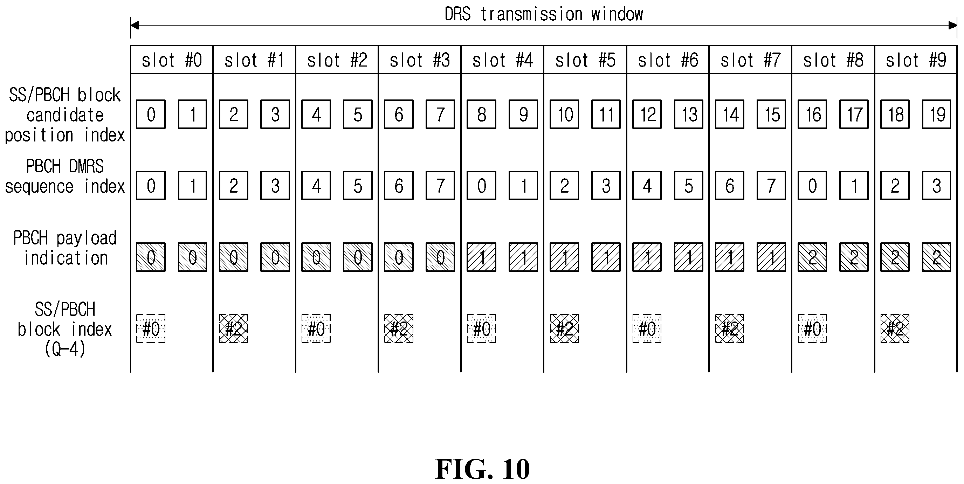

ssbSubcarrierSpacingCommon represents SCS of RMSI only for "operation without shared spectrum". The terminal assumes that the number of SSBs transmitted on the serving cell within the discovery burst transmission window is no more than $N_{SSB}^{QCL}$. The terminal may determine the SSB index according to $\left(N_{DM\text{-}RS}^{PBCH} \bmod N_{SSB}^{QCL}\right)$ or $\left(i \bmod N_{SSB}^{QCL}\right)$. Here, $i$ represents a candidate SSB index. Accordingly, more than one candidate SSB may correspond to one SSB index. Candidate SSBs corresponding to the same SSB index are QCLed. FIG. 10 illustrates examples of SSB candidate positions applicable to the present disclosure. FIG. 10 illustrates a case where Q is 4 and ssb-PositionsInBurst is set to '10100000'. In this case, only SSBs with SSB (SS/PBCH block) indexes of #0/#2 may be transmitted. ssb-PositionsInBurst and Q may be used to provide rate matching pattern within the DRS (Discovery Reference Signal) transmission window (or, discovery burst transmission window). For example, the terminal may perform rate matching for all SSB candidate position indexes QCLed with the actual transmitted SSB indexes provided by ssb-PositionsInBurst. In FIG. 10, the terminal may perform rate matching for time/frequency resources of SSB candidate position indexes 0/2/4/6/8/10/12/14/16/18. Therefore, when receiving a PDSCH scheduled by a PDCCH scrambled with CRC by C-RNTI, MCS-C-RNTI, CS-RNTI, RA-RNTI, MsbB-RNTI, P-RNTI, TC-RNTI (or a PDSCH with SPS (or with CRC) is scrambled by SI-RNTI and the system information indicator in the PDCCH (i.e., DCI) is set to 1), the terminal may assume SSB transmission according to ssb-PositionsInBurst if the PDSCH resource allocation overlaps with a PRB including SSB transmission resources (e.g., SS/PBCH block candidate position indexes 0/2/4/6/8/10/12/14/16/18). That is, the terminal may assume that the PRB including SSB transmission resources in the OFDM symbol in which SSB is transmitted is not available for PDSCH (i.e., not mapped).

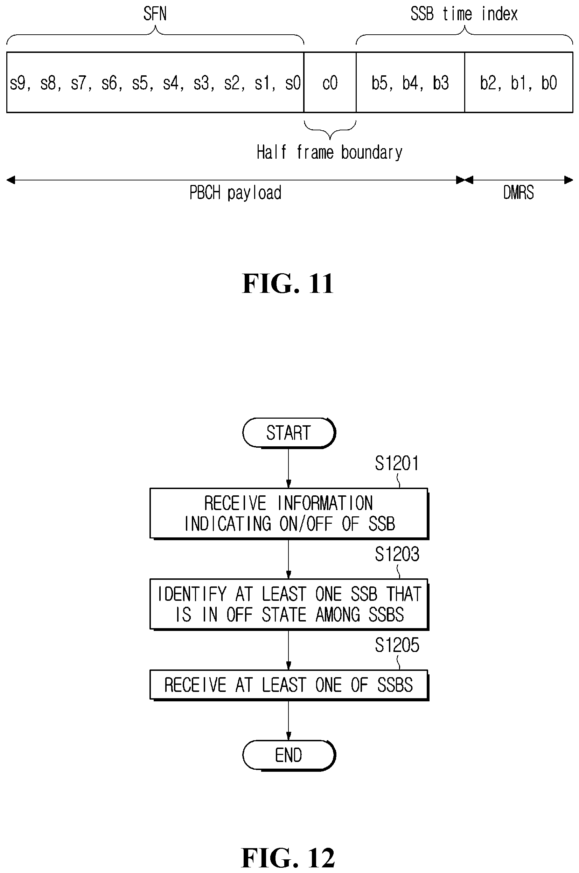

FIG. 11 illustrates an example of downlink time synchronization information applicable to the present disclosure. FIG. 11 illustrates that a terminal acquires information regarding DL time synchronization. The terminal may acquire DL synchronization by detecting an SSB. The terminal may identify the structure of an SSB burst set based on the detected SSB index, and may detect a symbol/slot/half-frame boundary accordingly. The number of the frame/half-frame to which the detected SSB belongs may be identified using SFN information and half-frame indication information.

Specifically, the terminal may obtain 10-bit SFN (System Frame Number) information from the PBCH (s0 to s9). Of the 10-bit SFN information, 6 bits are obtained from a MIB (Master Information Block) and the remaining 4 bits are obtained from a PBCH TB (Transport Block).

Next, the terminal may obtain 1-bit half-frame indication information (c0). When the carrier frequency is 3 GHz or less, the half-frame indication information may be implicitly signaled using a PBCH DMRS. The PBCH DMRS indicates 3-bit information by using one of 8 PBCH DMRS sequences. Therefore, in the case of L=4, among the 3 bits that may be indicated using 8 PBCH DMRS sequences, 1 bit remaining after indicating the SSB index may be used to indicate the half-frame.

Finally, the terminal may obtain the SSB index based on the DMRS sequence and the PBCH payload. The SSB candidates are indexed from 0 to L-1 in time order within the SSB burst set (i.e., half-frame). When L = 8 or 64, the Least Significant Bit (LSB) 3 bits of the SSB index may be indicated using 8 different PBCH DMRS sequences (b0 to b2). When L = 64, the Most Significant Bit (MSB) 3 bits of the SSB index are indicated via the PBCH (b3 to b5). When L = 2, the LSB 2 bits of the SSB index may be indicated using 4 different PBCH DMRS sequences (b0, b1). When L = 4, among the 3 bits that may be indicated using 8 PBCH DMRS sequences, 1 bit remaining after indicating the SSB index may be used to indicate the half-frame (b2).

Specific embodiments of the present disclosure

The present disclosure describes a technique for turning on/off a synchronization signal and a broadcast channel signal in a wireless communication system. Specifically, the present disclosure describes embodiments for dynamically turning on/off a synchronization signal/physical broadcast channel block (SSB) to save energy of a base station in a wireless communication system and performing various operations based on the same.

Energy saving of base stations may contribute to building eco-friendly networks by reducing carbon emissions and reducing operational expenditure (OPEX) of communication industry players. Therefore, energy saving of base stations is being considered important in wireless communication systems including 3GPP. In particular, due to the introduction of 5G that requires high transmission rates, base stations shall be equipped with more antennas and provide services through wider bandwidths and frequency bands. Accordingly, a study result was published that the energy cost of base stations reached 20% of the total OPEX. As interest in energy saving of base stations increased, a new SI (study item) called "study on network energy savings" was approved in 3GPP NR release 18.

Specifically, enhancement techniques are being considered to improve the energy saving capability, i.e., network energy saving (NES), from the perspective of transmission and reception of a base station. For example, methods are being considered to achieve dynamic and/or semi-statically efficient operation in one or more network energy saving techniques in the time, frequency, space and power domains utilizing potential assistance/feedback from a user equipment (UE), and potential UE assistance information, and to achieve finer granularity adaptation of transmission and/or reception.

The base station may operate technologies to control on/off for a certain duration on the time axis for the purpose of NES, control transmission/reception resources for UE-common or UE-specific signals/channels, change the amount of frequency-axis resources, control transmit power, or turn on/off an antenna port or a transmission reception point (TRP) in the spatial domain. Hereinafter, in the present disclosure, a state in which the above-mentioned NES-related technology(s) (hereinafter referred to as 'NES technology(s)') is applied is referred to as an NES mode or NES state. Hereinafter, in the present disclosure, according to Approach 1, the base station may inform the terminal which NES technology(s) is applied for each NES technology or NES technology group. Alternatively, according to Approach 2, the base station may pre-configure corresponding NES technology(s) or NES technology group(s) by code-point of a specific indicator (e.g., an indicator indicated via DCI or MAC CE, etc., an indicator set by higher layer signaling).

For Approach 1, if at least one NES technology is applied, the terminal may define the state as the NES mode or NES state. Alternatively, depending on which NES technology is applied, the terminal may define a different NES mode or a different NES state as being applied. For Approach 2, the terminal may define the state according to the NES technology linked to the indicator. For example, in a situation where a 1-bit indicator is used, an NES technology corresponding to '0' is not linked, and one or more NES technologies corresponding to '1' are linked, if an indicator with a value of '1' is received, the terminal may define the state as the NES mode or NES state. As another example, when a 2-bit indicator is used, and an NES technology corresponding to '00' is not linked, one or more NES technology_A is linked to '01', one or more NES technology_B is linked to '10', and one or more NES technology_C is linked to '11', and an indicator whose code point is not '00' is received, the terminal may define the state as NES mode or NES state. In this case, the terminal may determine whether it is an NES state or not or which NES state it is by code-point by defining NES state #1 when '01' is received, NES state #2 when '10' is received, and NES state #3 when '11' is received.

The present disclosure will propose various embodiments for saving energy of a base station by turning an SSB on/off, and for receiving random access, broadcast signals, and/or broadcast channels according to SSB on/off situations.

Even in a situation where there is no actual data to be transmitted from a base station, it is necessary to transmit SSBs according to a preset cycle, considering terminals that will camp on the cell or terminals that will perform RRM measurements. However, in a case where there is no terminal accessing the cell, or the number of terminals accessing the cell is very small, or there is no terminal in a specific beam direction, or a specific antenna element shall be turned off for energy saving, the base station may save energy by not performing transmission on some SSBs. Accordingly, the present disclosure proposes a technology for signaling on/off of SSB(s) more dynamically than before, and embodiments of operation methods of a terminal in a random access process, a broadcast signal reception process, and/or a broadcast channel reception process in a dynamic on/off situation of SSB(s).

FIG. 12 illustrates an example of a procedure for receiving an SSB in a wireless communication system according to an embodiment of the present disclosure. FIG. 12 illustrates an operation method of a terminal.

Referring to FIG. 12, in step S1201, the terminal receives information indicating on/off of the SSB. The information indicating on/off of the SSB may be defined in various ways. According to various embodiments, the information indicating on/off of the SSB may be received via at least one of DCI, MAC CE, broadcast data, multicast data, an RRC message, or system information. In addition, according to various embodiments, the information indicating on/off of the SSB may have a form indicating an index of at least one SSB to be turned on and/or at least one SSB to be turned off, or may have a form indicating one of available candidate patterns. Here, the index may correspond to one SSB or may correspond to multiple SSBs.

In step S1203, the terminal identifies at least one SSB that is in an off state among SSBs. That is, the terminal identies the transmission pattern of the SSBs. Based on the information indicating the on/off of the SSB, the terminal may determine at which occasion the SSB is transmitted and/or at which occasion the SSB is not transmitted. Accordingly, the terminal may attempt to receive and detect the SSBs only at the occasion when the SSB is turned on.

In step S1205, the terminal receives at least one of the SSBs. The terminal identifies occasions at which the SSB is turned on according to the identified transmission pattern, and attempts to receive the SSB at each of the identified occasions. At this time, at least one SSB may be detected. Upon receiving at least one of the SSBs, the terminal may perform an operation based on SSB detection.

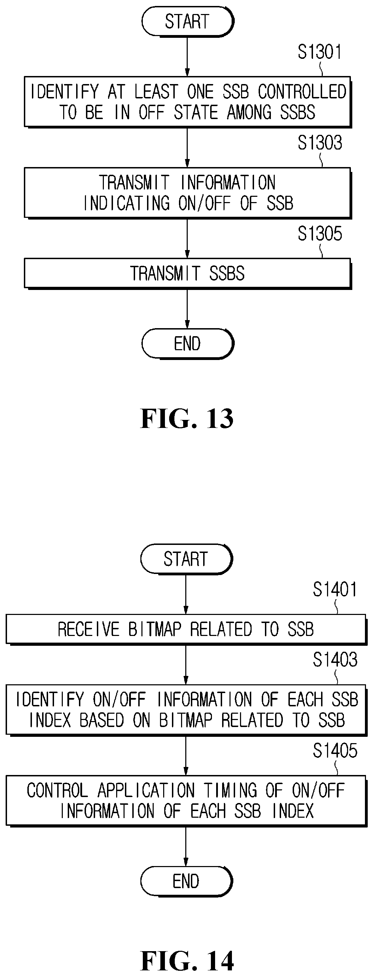

FIG. 13 illustrates an example of a procedure for transmitting an SSB in a wireless communication system according to an embodiment of the present disclosure. FIG. 13 illustrates an operation method of a base station.

Referring to FIG. 13, in step S1301, the base station identifies at least one SSB controlled to be in an off state among the SSBs. That is, the base station identifies the transmission pattern of SSBs. The base station may determine at which occasion the SSB is transmitted and/or at which occasion the SSB is not transmitted. At this time, the ratio of at least one SSB that is turned off may be determined according to the goal of energy saving.

In step S1303, the base station transmits information indicating on/off of the SSB. The information indicating on/off of the SSB may be defined in various ways. According to various embodiments, the information indicating on/off of the SSB may be received via at least one of DCI, MAC CE, broadcast data, multicast data, RRC message, or system information. In addition, according to various embodiments, the information indicating on/off the SSB may have a form indicating an index of at least one SSB to be turned on and/or at least one SSB to be turned off, or may have a form indicating one of available candidate patterns. Here, the index may correspond to one SSB or may correspond to multiple SSBs.

In step S1305, the base station transmits SSBs. The base station may identify occasions at which the SSBs are turned on according to the identified transmission pattern, and transmit the SSBs at each of the identified occasions.

[Embodiment #1] Method of signaling on/off of SSB

FIG. 14 illustrates an example of a procedure for receiving SSB on/off information in the form of a bitmap in a wireless communication system according to an embodiment of the present disclosure. FIG. 14 illustrates an operation method of a terminal.

Referring to FIG. 14, in step S1401, the terminal receives a bitmap related to an SSB. For example, the terminal may receive the bitmap related to the SSB indicating on/off information for each SSB index or for each SSB index group through DCI, PDSCH, MAC CE, and/or higher layer signaling.

In step S1403, the terminal identifies on/off information of each SSB index based on the bitmap related to the SSB. The terminal may identify at least one SSB index or SSB index group mapped to each bit included in the bitmap related to the SSB based on a predefined mapping rule, and identify the on/off state for each SSB index based on the value of each bit. According to one embodiment, the predefined mapping rule is as described in alternative embodiments 1-1 to 1-3. According to one embodiment, a plurality of SSB candidate indexes may be linked to one SSB index.

In step S1405, the terminal controls the application time of the on/off information of each SSB index. According to one embodiment, the terminal may determine the application time of the on/off information of each SSB index after a designated time period (e.g., X ms) or a designated slot (e.g., Y slot) based on the time point of transmitting the ACK information for the bitmap related to the SSB. According to one embodiment, the terminal may receive information (e.g., relative time offset or absolute time point) about the application time of the corresponding information together with the bitmap related to the SSB. The terminal may apply the on/off information of each SSB index at the identified information application time point. In this way, the terminal applies the on/off information of each SSB index at the application time of the identified information to minimize the mismatch problem with the base station. However, according to various embodiments, instead of controlling the application time of the on/off information by SSB index, a method of increasing the number of transmissions by the base station for the bitmap related to the SSB may also be used. Alternatively, a method of controlling the application time of the on/off information of each SSB index and a method of increasing the number of transmissions for bitmaps related to the SSB at the base station may be used simultaneously.

SSB on/off signaling will be described in greater detail as follows.

It is possible to signal whether to transmit SSB index(es) via a bitmap for each SSB index or for each group of indexes (e.g., *ssb-PositionsInBurst* in *SIB1* or *ServingCellConfigCommon*). Specifically, the terminal may receive DCI related to system information, obtain allocation information for receiving system information based on the DCI, receive system information based on the allocation information, and obtain information related to an SSB included in the system information. [Table 7] below shows the configuration of *ServingCellConfigCommon* extracted from TS 38.331, and [Table 8] shows the definitions of parameters included in *ServingCellConfigCommon.*

[Table 7]

```
ServingCellConfigCommon ::=        SEQUENCE {
    physCellId                PhysCellId                              OPTIONAL,  -- Cond
HOAndServCellAdd,
    downlinkConfigCommon        DownlinkConfigCommon                    OPTIONAL,  -- Cond
HOAndServCellAdd
    uplinkConfigCommon        UplinkConfigCommon                      OPTIONAL,  -- Need M
    supplementaryUplinkConfig    UplinkConfigCommon                      OPTIONAL,  -- Need S
    n-TimingAdvanceOffset        ENUMERATED { n0, n25600, n39936 }        OPTIONAL,  --
Need S
```

```
ssb-PositionsInBurst        CHOICE {
    shortBitmap            BIT STRING (SIZE (4)),
    mediumBitmap            BIT STRING (SIZE (8)),
    longBitmap            BIT STRING (SIZE (64))
```

[Table 8]

| |
|---|
| *longBitmap*<br>Bitmap when maximum number of SSBs per half frame equals to 64 as defined in TS 38.213 [13], clause 4.1. |
| *mediumBitmap*<br>Bitmap when maximum number of SSBs per half frame equals to 8 as defined in TS 38.213 [13], clause 4.1. |
| *shortBitmap*<br>Bitmap when maximum number of SSBs per half frame equals to 4 as defined in TS 38.213 [13], clause 4.1. |
| *ssb-PositionsInBurst*<br>For operation in licensed spectrum, indicates the time domain positions of the transmitted SS-blocks in a half frame with SSBs as defined in TS 38.213 [13], clause 4.1. The first/leftmost bit corresponds to SSB index 0, the second bit corresponds to SSB index 1, and so on. Value 0 in the bitmap indicates that the corresponding SSB is not transmitted while value 1 indicates that the corresponding SSB is transmitted. The network configures the same pattern in this field as in the corresponding field in ServingCellConfigCommonSIB. |

(continued)

| For operation with shared spectrum channel access, the UE assumes that one or more SSBs indicated by ssb-PositionsInBurst may be transmitted within the discovery burst transmission window and have candidate SSBs indexes corresponding to SSB indexes provided by ssb-PositionsInBurst (see TS 38.213 [13], clause 4.1). If the k-th bit of ssb-PositionsInBurst is set to 1, the UE assumes that one or more SSBs within the discovery burst transmission window with candidate SSB indexes corresponding to SSB index equal to k-1 may be transmitted; if the kt-th bit is set to 0, the UE assumes that the corresponding SSB(s) are not transmitted. The k-th bit is set to 0, where k > ssb-PositionQCL and the number of actually transmitted SSBs is not larger than the number of 1's in the bitmap. The network configures the same pattern in this field as in the corresponding field in ServingCellConfigCommon-SIB. For operation with shared spectrum channel access in FR1, only mediumBitmap is used, and for FR2-2, longBitmap is used. |
|---|

[Table 9] below shows the configuration of *ServingCellConfigCommonSIB* extracted from TS 38.331, and [Table 10] shows the definitions of the parameters included in *ServingCellConfigCommonSIB*.

[188]    [Table 9]

```
ServingCellConfigCommonSIB ::=      SEQUENCE {
    downlinkConfigCommon           DownlinkConfigCommonSIB,
    uplinkConfigCommon             UplinkConfigCommonSIB              OPTIONAL, -- Need R
    supplementaryUplink            UplinkConfigCommonSIB              OPTIONAL, -- Need R
    n-TimingAdvanceOffset          ENUMERATED { n0, n25600, n39936 }         OPTIONAL, -- Need S
    ssb-PositionsInBurst           SEQUENCE {
        inOneGroup                 BIT STRING (SIZE (8)),
        groupPresence              BIT STRING (SIZE (8))              OPTIONAL  -- Cond FR2-Only
    },
```

[Table 10]

| groupPresence |
|---|
| This field is present when maximum number of SSBs per half frame equals to 64 as defined in TS 38.213 [13], clause 4.1. The first/leftmost bit corresponds to the SS/PBCH index 0-7, the second bit corresponds to SSB 8-15, and so on. Value 0 in the bitmap indicates that the SSBs according to *inOneGroup* are absent. Value 1 indicates that the SSBs are transmitted in accordance with *inOneGroup*. |
| **inOneGroup** |
| When maximum number of SSBs per half frame equals to 4 as defined in TS 38.213 [13], clause 4.1, only the 4 leftmost bits are valid; the UE ignores the 4 rightmost bits. When maximum number of SSBs per half frame equals to 8 as defined in TS 38.213 [13], clause 4.1, all 8 bits are valid. The first/ leftmost bit corresponds to SSB index 0, the second bit corresponds to SSB index 1, and so on. When maximum number of SSBs per half frame equals to 64 as defined in TS 38.213 [13], clause 4.1, all 8 bit are valid; The first/ leftmost bit corresponds to the first SSB index in the group (i.e., to SSB index 0, 8, and so on); the second bit corresponds to the second SSB index in the group (i.e., to SSB index 1, 9, and so on), and so on. Value 0 in the bitmap indicates that the corresponding SSB is not transmitted while value 1 indicates that the corresponding SSB is transmitted. |
| **ssb-PositionsInBurst** |
| Time domain positions of the transmitted SS-blocks in an SS-burst as defined in TS 38.213 [13], clause 4.1. |

(continued)

For operation with shared spectrum channel access in FR1, only inOneGroup is used and the UE interprets this field same as mediumBitmap in ServingCellConfigCommon. The UE assumes that a bit in inOneGroup at position

$k > N_{SSB}^{QCL}$ is 0, where $N_{SSB}^{QCL}$ is obtained from MIB as specified in TS 38.213 [13], clause 4.1. For operation with shared spectrum channel access in FR2-2, the m-th bit in groupPresence is set to 0 for $m > N_{SSB}^{QCL}/8$, where

$N_{SSB}^{QCL}$ is obtained from MIB as specified in TS 38.213 [13], clause 4.1.

The bitmap information as above may be transmitted via group-common DCI, MAC CE and/or broadcast DCI included in multicast/broadcast PDSCH, and/or PDSCH scheduled via the broadcast DCI, etc. The group-common DCI may include DCI transmitted via a search space (SS) set configured in a UE-common and/or group-common manner, and/or DCI scrambled with RNTI allocated in a UE-common and/or group-common manner. MAC CE and/or broadcast DCI included in multicast/broadcast PDSCH may include DCI for scheduling a PDSCH carrying system information, paging, or multicast/broadcast data.

As described above, when on/off information of each SSB index(es) is received via DCI, PDSCH, and/or MAC CE, even if on/off information of each SSB index(es) is received via cell-common RRC signaling such as existing SIB1 and/or *ServingCellConfigCommon,* the terminal may ignore and override the information received via cell-common RRC signaling.

Specifically, the bit location of the DCI or MAC CE corresponding to each SSB index or SSB index group may be defined or set in advance.

According to Alternative 1-1, as many bits as the maximum number of SSB indexes defined for each frequency domain may be arranged in the DCI or MAC CE. In this case, the k-th bit may correspond to on/off information of the k-th SSB index. The maximum number of SSB indexes may be the L_max value defined in the TS 38.213 specification. For example, the maximum number of SSB indexes may be L_max=4 in FR1 of 3 GHz or less, L_max=8 in FR1 of 3 GHz or more, and L_max=64 in FR2.

According to Alternative 1-2, bits less than the maximum number of SSB indexes defined for each frequency domain may be provided in the DCI or MAC CE, and information corresponding to each bit may be determined by a predefined rule. For example, in FR2, eight bits may be provided in the DCI or MAC CE, and SSB indexes corresponding to the bits may be sequentially grouped by eight, and each index group may be mapped to each bit. For example, index group #1 including SSB indexes 0 to 7 may be mapped to the first bit among the bits provided in the DCI or MAC CE, and index group #2 including SSB indexes 8 to 15 may be mapped to the second bit among the bits provided in the DCI or MAC CE. Accordingly, on/off information of each SSB index or on/off information of each SSB index group may be indicated based on the mapping as described above.

According to Alternative 1-3, a mapping relationship between an SSB index or SSB indexes corresponding to each bit of a DCI or MAC CE may be set. For example, a relationship may be set in advance that an SSB index #k corresponds to an n-th bit, and on/off information of the SSB index #k may be indicated through the n-th bit. For another example, a relationship may be set in advance that an SSB index #n to #n+k corresponds to an m-th bit, and on/off information of the SSB indexes #n to #n+k may be indicated at once through the m-th bit. For another example, a terminal that has received information that K bit(s) are allocated to a DCI or MAC CE may recognize a mapping relationship between a total of L_max SSB indexes and the K bit(s) based on the K value and a predefined rule. For example, a rule may be defined in which an equal number of SSB index(es) are sequentially mapped to each bit. In this case, if L_max = 8 and the K value is 2, the terminal may recognize that the first bit of the two bits corresponds to SSB indexes 0 to 3, and the second bit of the two bits corresponds to SSB indexes 4 to 7.

In the above-described embodiments, a population of SSB indexes for which on/off information is indicated via DCI or MAC CE may be L_max, or the number of SSB index(es) for which transmission is indicated via the *ssb-PositionsInBurst* parameter. Here, the SSB index(es) for which transmission is indicated via the *ssb-PositionsInBurst* parameter may be referred to as 'N_SSB'. For example, if the 8-bit bitmap information in FR1 is '11110000', N_SSB may mean 4.

According to Alternative 1-1, as many bits as N_SSB may be provided in the DCI or MAC CE. In this case, the k-th bit may correspond to the on/off information of the k-th SSB index for which transmission is set in the *ssb-PositionsInBurst* parameter.

According to Alternative 1-2, when in FR1, 8-bit bitmap information is '11001100', N_SSB is 4. At this time, bits less than N_SSB (e.g., 2 bits) may be provided in the DCI or MAC CE. At this time, the SSB indexes for which transmission is indicated may be sequentially grouped by two and then mapped to the respective bits. That is, the SSB indexes 0 and 1 for which transmission is indicated by bitmap information '11001100' may be mapped to the first bit among the two bits provided in the DCI or MAC CE, and the SSB indexes 4 and 5 for which transmission is indicated by the bitmap information '11001100' may be linked to the second bit among the two bits provided in the DCI or MAC CE, and on/off information of the corresponding SSB indexes may be indicated based on this linkage.

According to Alternative 1-3, a terminal that has received information that K bit(s) are allocated to DCI or MAC CE may recognize a mapping relationship between the N_SSB SSB indexes and the K bit(s) based on the K value and a predefined rule. For example, a rule in which an equal number of SSB index(es) are sequentially mapped to each bit may be predefined. At this time, when in FR1, the bitmap information of 8 bits is indicated as '11101110', so that N_SSB is 6 and the K value is 2, the terminal may recognize that the first bit of the two bits is mapped to SSB indexes 0 to 2, and the second bit of the two bits is mapped to SSB indexes 4 to 6.

According to one embodiment, the off information of a specific SSB index may be signaled by the power information of the SSB. If the transmission power value of the SSB of a specific index is signaled as a specific value through DCI and/or PDSCH, etc., the terminal may interpret that the corresponding SSB is not transmitted. The specific value may be the minimum value of a set value range, or a reserved state.

According to one embodiment, multiple SSB candidate indexes may be linked to one SSB index. Specifically, the SSB index may be determined through a modulo operation of multiple SSB candidate indexes and a $N_{SSB}^{QCL}$ value set by higher layer signaling, as shown in [Table 11] below. In the case of turning a specific SSB index on/off using bitmap information according to the above-described embodiments, the on/off information may be applied to all SSB candidate indexes corresponding to the bitmap information in a specific frequency band (e.g., an unlicensed band).

Meanwhile, the $N_{SSB}^{QCL}$ value indicates how many SSB candidate indexes the SSB(s) are cyclically rotated. The $N_{SSB}^{QCL}$ value may be signaled via DCI, PDSCH, and/or MAC CE as described above. When the $N_{SSB}^{QCL}$ value is received via DCI, PDSCH, and/or MAC CE, the terminal may ignore and override the $N_{SSB}^{QCL}$ value received via existing master information block (MIB) and/or cell-common RRC signaling such as ServingCellConfig or ServingCellConfig-Common.

According to one embodiment, the $N_{SSB}^{QCL}$ value may be utilized in a specific frequency band operation, such as an unlicensed band operation. Here, the unlicensed band operation may be understood as an operation with shared spectrum channel access. However, the above-described embodiment is not limited to the unlicensed band. For example, the above-described embodiment may be applied to a situation in which multiple SSB candidate indexes are linked to one SSB index, and/or a situation in which SSBs are repeatedly used, regardless of the frequency band.

The following [Table 11] is an excerpt from TS 38.213 section 4.1.

[Table 11]

| |
|---|
| For operation without shared spectrum channel access, an SS/PBCH block index is same as a candidate SS/PBCH block index. |
| For operation with shared spectrum channel access, a UE assumes that transmission of SS/PBCH blocks in a half frame is within a discovery burst transmission window that starts from the first symbol of the first slot in a halfframe The UE can be provided per serving cell by discoveryBurstWindowLength a duration of the discovery burst transmission window If discoveryBurstWindowLength is not provided, the UE assumes that the duration of the discovery burst transmission window is a half frame For a serving cell, the UE assumes that a periodicity of the discovery burst transmission window is same as a periodicity of half frames for receptions of SS/PBCH blocks in the serving cell The UE assumes that one or more SS/PBCH blocks indicated by ssb-PositionsInBurst may be transmitted within the discovery burst transmission window and have candidate SS/PBCH blocks indexes corresponding to SS/PBCH block indexes provided by ssb-PositionsInBurst. If MSB k, k ≥ 1, of ssb-PositionsInBurst is set to 1, the UE assumes that SS/PBCH block(s) within the discovery burst transmission window with candidate SS/PBCH block index(es) corresponding to SS/PBCH block index equal to k-1 may be transmitted; if MB k is set to 0, the UE assumes that the SS/PBCH block(s) are not transmitted If MBS k, k ≥ 1, of inOneGroup is set to 1, and MSB m, m ≥ 1, of groupPresence is set to 1, the UE assumes that SS/PBCH block(s) within the discovery burst transmission window with candidate SS/PBCH block index(es) corresponding to SS/PBCH block index determined by k and m may be transmitted; otherwise, the UE assumes that the SS/PBCH block(s) are not transmitted. |

(continued)

For operation with shared spectrum channel access in FR1, a UE assumes that SS/PBCH blocks in a serving cell that are within a same discovery burst transmission window or across discovery burst transmission windows are quasi co-located with respect to average gain, quasi co-location 'typeA' and 'typeD' properties, when applicable [6, TS 38.214], if a value of ( $N_{DM\text{-}RS}^{PBCH} \bmod N_{SSB}^{QCL}$ ) is same among the SS/PBCH blocks. $N_{DM\text{-}RS}^{PBCH}$ is an index of a DM-RS sequence transmitted in a PBCH of a corresponding SS/PBCH block, and $N_{SSB}^{QCL}$ is either provided by ssb-PositionQCL or, if ssb-PositionQCL is not provided, obtained from a MIB provided by a SS/PBCH block according to Table 4.1-1 with $k_{SSB} < 24$ [4, TS 38.211]. The UE can determine an SS/PBCH block index according to ( $N_{DM\text{-}RS}^{PBCH} \bmod N_{SSB}^{QCL}$ ), or according to ( $i \bmod N_{SSB}^{QCl}$ ) where $i$ is the candidate SS/PBCH block index.

The UE assumes that within a discovery burst transmission window, a number of transmitted SS/PBCH blocks on a serving cell is not larger than $N_{SSB}^{QCL}$ and a number of transmitted SS/PBCH blocks with a same SS/PBCH block index is not larger than one.

For operation with shared spectrum channel access in FR2-2, a UE assumes that SS/PBCH blocks in a serving cell that are within a same discovery burst transmission window or across discovery burst transmission windows are quasi co-located with respect to average gain, quasi co-location 'typeA' and 'typeD' properties, when applicable, if a value of ( $i \bmod N_{SSB}^{QCl}$ ) is same among the SS/PBCH blocks, where $i$ is the candidate SS/PBCH block index. $N_{SSB}^{QCL}$ is either provided by ssb-PositionQCL or, if ssb-PositionQCL is not provided, obtained from a MIB provided by a SS/PBCH block according to Table 4.1-2. The UE can determine an SS/PBCH block index according to ( $i \bmod N_{SSB}^{QCl}$ ). The UE assumes that within a discovery burst transmission window, a number of transmitted SS/PBCH blocks on a serving cell is not larger than $N_{SSB}^{QCL}$ and a number of transmitted SS/PBCH blocks with a same SS/PBCH block index is not larger than one.

For an SSB index to which on/off information is applied through the method described above, if a PDSCH overlaps with the SSB, the terminal may assume that the PDSCH is not mapped to PRBs including the SSB, or determine that the SSB is not available for the PDSCH. Here, if an SSB candidate index is used, the SSB index may be understood to include all SSB candidate indexes linked to the SSB index.

According to various embodiments, the on/off information of the SSB(s) may be updated. In this case, a mismatch problem may occur between the base station and the terminal because the terminal loses the update information of the SSB(s). In order to minimize the mismatch problem, the application time of the information of the SSB(s) may be controlled, the number of transmissions of the SSB(s) may be increased, or the application time of the information of the SSB(s) may be signaled together with the SSB(s). For example, the application time of the information of the SSB(s) may be determined to be X ms or Y slots after the time point at which the terminal transmits an ACK (acknowledge) for the on/off information of the SSB(s). Alternatively, the base station may transmit the on/off information of the SSB(s) multiple times. When the on/off information of the SSB(s) is transmitted multiple times, stability may be improved. Alternatively, the application time of the information may be signaled together through the container containing the on/off information of the SSB(s). For example, the application time of the information may be set as a relative time offset from a time point at which the container is transmitted, or as an absolute time such as SFN Z.

According to various embodiments, certain SSB index(es) may be treated as high priority so that the on/off information may not be dynamically updated. The SSB index(es) having high priority may be predefined or set by higher layer signaling. For example, the higher layer signaling may include cell-specific RRC signaling or UE-specific RRC signaling. When the on/off information of each SSB index(es) through DCI, PDSCH, and/or MAC CE is configured as a bitmap, the bit(s) corresponding to the SSB index(es) having high priority may not be allocated. Here, the SSB index(es) having high priority may mean the SSB index(es) for which transmission is not set via the *ssb-PositionsInBurst* parameter.

The embodiment of dynamically changing the on/off of the SSB as described in Embodiment #1 may be applied only to specific situations and/or specific time periods. For example, it may be applied when a NES state is indicated, when a specific DRX (discontinuous reception) configuration is indicated or applied, when switching to a specific BWP, or during the configured DRX active time or outside DRX active time. However, the listed situations and/or time periods are merely examples to help understanding, and the situations and/or time periods to which the embodiment of dynamically changing the on/off of the SSB is applied are not limited to the examples described above. In the present disclosure, the DRX configuration may be a DRX configuration set for an idle/inactive terminal, a C-DRX configuration set for a connected terminal, or a configuration including a DTX and/or DRX pattern of a base station in a cell-specific or UE group-common manner (hereinafter referred to as 'cell DTX/DRX'). In this case, the DRX active time may mean a time period during which onDurationtimer and/or inactivitytimer operate, or a time during which the terminal shall stay awake for transmission and/or reception.

[Embodiment #2] Random access procedure

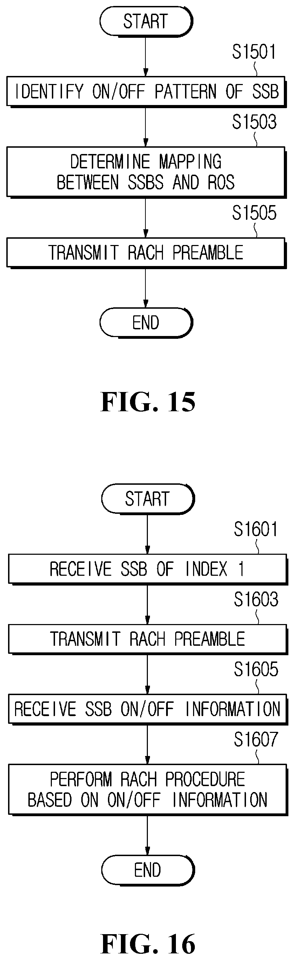

FIG. 15 illustrates an example of a procedure for transmitting a RACH preamble based on SSB on/off information in a wireless communication system according to an embodiment of the present disclosure. FIG. 15 illustrates an operation method of a terminal.

Referring to FIG. 15, in step S1501, the terminal identifies an on/off pattern of an SSB. The on/off pattern of the SSB may be identified according to various embodiments described above. Specifically, the terminal may identify the on/off pattern of the SSB based on signaling from a base station.

In step S1503, the terminal determines a mapping between SSBs and ROs (RACH occasions). Each of the SSBs transmitted from the base station is associated with at least one RO, and the terminal transmits a RACH preamble in the RO associated with the detected SSB. According to various embodiments, since the indexes of the SSBs transmitted may change by controlling the on/off pattern of the SSB, the terminal may reset a mapping relationship between at least one SSB in the on state and the ROs based on the on/off pattern of the SSB. For resetting the mapping relationship between the SSBs and the ROs, according to one embodiment, the terminal may redefine a mapping with all ROs according to at least one SSB in the on state. That is, the terminal may sequentially map the remaining SSB indexes except for at least one SSB index in the off state to the ROs. According to another embodiment, the terminal may map at least one RO associated with at least one SSB in the off state to another SSB in the on state.

In step S1505, the terminal transmits a RACH preamble. Specifically, the terminal may detect an SSB, identify an RO associated with the detected SSB based on mapping between the SSBs and the ROs, and transmit a RACH preamble in the identified RO.

As mentioned above, consideration may be given to SSB-to-RO mapping. As shown in [Table 12] below, according to the standard, SSB-to-RO mapping is performed based on the ssb-PositionsInBurst information set via SIB1 or ServingCellConfigCommon, and the association period and association pattern period may be determined. [Table 12] shows TS 38.213 Section 8.1.

[Table 12]

| |
|---|
| SSB indexes provided by ssb-PositionsInBurst in SIB1 or in ServingCellConfigCommon are mapped to valid PRACH occasions in the following order where the parameters are described in [4, TS 38.211].<br>- First, in increasing order of preamble indexes within a single PRACH occasion<br>- Second, in increasing order of frequency resource indexes for frequency multiplexed PRACH occasions<br>- Third, in increasing order of time resource indexes for time multiplexed PRACH occasions within a PRACH slot<br>- Fourth, in increasing order of indexes for PRACH slots |

(continued)

An association period, starting from frame 0, for mapping SSB indexes to PRACH occasions is the smallest value in the set determined by the PRACH configuration period according Table 8.1-1 such that $N_{Tx}^{SSI}$ SSB indexes are mapped at least once to the PRACH occasions within the association period, where a UE obtains $N_{Tx}^{SSI}$ from the value of ssb-PositionsInBurst in SIB1 or in ServingCellConfigCommon. If after an integer number of SSB indexes to PRACH occasions mapping cycles within the association period there is a set of PRACH occasions or PRACH preambles that are not mapped to $N_{Tx}^{SSI}$ SSB indexes, no SSB indexes are mapped to the set of PRACH occasions or PRACH preambles. An association pattern period includes one or more association periods and is determined so that a pattern between PRACH occasions and SSB indexes repeats at most every 160 msec. PRACH occasions not associated with SSB indexes after an integer number of association periods, if any, are not used for PRACH transmissions.

As in [Embodiment #1] described above, if it is possible to update on/off information of a specific SSB index through DCI, PDSCH, and/or MAC CE, it is necessary to consider the updated on/off information when mapping SSB-to-RO. A mapping method of SSB-to-RB considering the updated on/off information may follow at least one of the following embodiments.

According to Alternative 2-1, the terminal may re-perform SSB-to-RO mapping using only the SSB index(es) that are in the ON state based on the updated ON/OFF information of the SSB indexes. That is, the ON/OFF state of the $N_{Tx}^{SSI}$ SSB index(es) of [Table 12] may be updated based on the ON/OFF information of [Embodiment #1]. For example, the number of actually transmitted SSB indexes determined based on the *ssb-PositionsInBurst* information set via SIB1 or *ServingCellConfigCommon* is 4, and if one of the SSB indexes being turned off is signaled via DCI or PDSCH as described in [Embodiment #1], then $N_{Tx}^{SSI} = 3$.

According to Alternative 2-2, the terminal maintains the SSB-to-RO mapping based on the *ssb-PositionsInBurst* information set via the existing SIB1 or *ServingCellConfigCommon,* and treats the RO(s) corresponding to the SSB index(es) in the off state or the corresponding preamble(s) in the RO as invalid based on the updated on/off information. Alternatively, the terminal may not treat the RO corresponding to the SSB index(es) in the off state or the corresponding preamble in the RO as invalid, but treat it as corresponding to the SSB index mapped near the RO or the corresponding preamble in the RO. For example, it is assumed that RO#1 is associated with SSB index 1 and RO#2 is linked to SSB index 2. At this time, if SSB index 2 is set to the off state by DCI or PDSCH, the terminal may treat RO#2 as invalid, or may treat RO#2 as also being linked to SSB index 1.

According to Alternative 2-3, when SSB-to-RO mapping is re-performed by on/off information update for SSB index(es) as described in Embodiment 2-1, a problem may occur due to mismatch in the corresponding information. To solve this, the terminal may maintain an association period and/or an association pattern period determined by SSB-to-RO mapping based on *ssb-PositionsInBurst* information set via SIB1 or *ServingCellConfigCommon,* and perform SSB-to-RO mapping. For example, if the association period or association pattern period determined by SSB-to-RO mapping based on *ssb-PositionsInBurst* information set via SIB1 or *ServingCellConfigCommon* is 80 msec, the terminal may reflect the on/off information of the updated SSB index(es) within the 80 msec and re-perform SSB-to-RO mapping using only the SSB indexes in the on state.

In applying the above-described alternatives, the number of PRACH slots may also be changed based on the number of SSB indexes in the on state. For example, if the number of PRACH slots is reduced as much as the number of SSB indexes in the on state is reduced, the energy saving effect of the base station may be maximized. Specifically, N PRACH slots may be set per frame by RACH configuration in SIB1, and K SSB indexes may be set to be actually transmitted. If it is indicated that K/2 out of K SSB indexes are turned off through DCI, the number of PRACH slots may also be reduced to N/2 per frame. In this case, N/2 slots out of the N PRACH slots may be determined according to a preset configuration of the base station or a predefined rule. For example, the predefined rule may include a rule that among N slots in a frame, the first N/2 slots are treated as valid, or a rule that among two consecutive PRACH slots, one slot is treated as valid and the next slot is treated as invalid.

The above-described alternatives may be applied to SSB-to-PO (PUSCH occasion) in addition to SSB-to-RO mapping. For example, Alternative 2-1 to 2-3 described above may be applied to SSB-to-PO (PUSCH occasion) mapping of the 2-step RACH procedure in a similar manner. In the case of the 2-step RACH, the RACH preamble and msg-3 are transmitted as MSGA (message-A), and for this, selection of PO as well as RO is required. The PO may be selected based on the selected RO and/or the selected RACH preamble. The PO and RACH preamble have a mapping relationship. Specifically, the preamble indexes are sequentially listed firstly according to the index within a PO, secondly according to the frequency-axis positions of the POs, and thirdly according to the time-axis positions of the POs. The POs are listed firstly according to the frequency-axis positions of the POs, secondly according to the DMRS resource indexes within a PO, and thirdly according to the time-axis positions of the POs, and then may be mapped to each other. In this way, since the RO is selected based on the SSB, as a result, the selection of the PO may be related to the on/off of the SSB.

Specifically, according to Alternative 2-4, the terminal may re-perform SSB-to-PO mapping using only the SSB index(es) in the on state based on the updated ON/OFF information of the SSB indexes. For example, if the number of actually transmitted SSB indexes determined based on signaling from the base station is 4, and one of the SSB indexes being turned off is signaled via DCI or PDSCH as described in [Embodiment #1], the terminal may re-perform SSB-to-PO mapping based on the three SSB indexes.

According to Alternative 2-5, the terminal may maintain the existing SSB-to-PO mapping, and treat the PO(s) corresponding to the SSB index(es) in the off state or the corresponding preamble(s) in the PO as invalid based on the updated on/off information. Alternatively, the terminal may not treat the PO(s) corresponding to the SSB index(es) in the off state or the corresponding preamble in the PO as invalid, but may treat them as corresponding to the SSB index mapped near the PO or the corresponding preamble in the PO. For example, assume that PO#1 is linked to SSB index 1 and PO#2 is linked to SSB index 2. In this case, if SSB index 2 is designated as the off state by DCI or PDSCH, the terminal may treat PO#2 as invalid, or treat PO#2 as also being linked to SSB index 1.

According to Alternative 2-6, when SSB-to-PO mapping is re-performed by on/off information update for SSB index(es) as described in Embodiment 2-4, a problem may occur due to mismatch in the information. To solve this, the terminal may maintain the association period and/or association pattern period determined by signaling-based SSB-to-PO mapping and perform SSB-to-PO mapping. For example, when the association period or association pattern period determined by signaling-based SSB-to-PO mapping is 80 msec, the terminal may reflect the on/off information of the updated SSB index(es) within the 80 msec and re-perform SSB-to-PO mapping using only the SSB indexes in the on state.

Next, a random access procedure will be described in a situation where a PRACH corresponding to a specific SSB index is transmitted and then the SSB index is turned off. For example, after a terminal transmits a PRACH corresponding to a specific SSB index, the SSB index may be turned off in the same manner as described in the above-described [Embodiment #1]. In this case, the RACH procedure may be performed as follows.

FIG. 16 illustrates an example of a procedure for performing a RACH procedure based on SSB on/off in a wireless communication system according to an embodiment of the present disclosure. FIG. 16 illustrates an operation method of a terminal.

Referring to FIG. 16, in step S1601, the terminal receives an SSB of index 1. According to an embodiment, the terminal may detect an SSB of index 1 that is in an on state.

In step S1603, the terminal transmits a RACH preamble to a base station. At this time, the terminal may transmit the RACH preamble to the base station in an RO corresponding to index 1 of the SSB that is in the on state.

In step S1605, the terminal receives SSB on/off information from the base station. The base station may transmit SSB on/off information to the terminal according to various embodiments described above. At this time, in the present embodiment, the SSB on/off information may indicate off for index 1.

In step S1607, the terminal performs the RACH procedure based on the SSB on/off information. That is, as the index (e.g., index 1) of the SSB associated with the RO used to transmit the RACH preamble is turned off, at least one parameter related to the RACH procedure may be changed. According to one embodiment, when the RAR is not received, the terminal may control the values of a power ramping counter and/or a PRACH retransmission counter. According to one embodiment, the terminal may terminate, hold, or increase a random access response (RAR) window.

According to one embodiment, even if an RAR corresponding to the transmitted PRACH is not received, the terminal may not increase a power ramping counter and/or a PRACH retransmission counter value. Alternatively, the terminal may assume that the RACH process itself is not triggered/started from the perspective of terminal operation. This is because when the base station turns off the corresponding SSB index, not only the TX chain but also the RX chain in the corresponding beam direction may be deactivated, which may result in a situation where reception of the corresponding PRACH at the base station fails.

According to one embodiment, when the terminal receives information indicating that a specific SSB index is turned off after a PRACH transmission corresponding to the specific SSB index, the terminal may control the RAR window as in the following options:

Option A: The terminal may terminate the RAR window and attempt PRACH retransmission at the time of receiving information indicating that the corresponding SSB index is turned off. That is, the terminal may recognize that the RAR corresponding to the transmitted PRACH will not be received and may quickly terminate the RAR window, thereby minimizing the latency of the random access procedure.

Option B: The terminal may hold the RAR window by considering that the on/off of the SSB is dynamically changed. That is, the terminal may hold the RAR window until information indicating that the SSB is turned on is received.

Option C: The terminal may increase the RAR window by X times by considering the dynamic change of the on/off of the SSB.

Depending on how often the SSBs are turned on/off, which of the above-described options is more efficient for the random access procedure may vary. Therefore, which of the above-described options to use may be set by the base station.

The above-described embodiments have been described with reference to PRACH transmission in a 4-step RACH procedure as an example. However, the above-described embodiments may be similarly applied to msgA transmission (i.e., PRACH and PUSCH transmission) in a 2-step RACH procedure.

Specifically, according to one embodiment, even if the MSGB (message-B) corresponding to the PRACH and PUSCH transmitted according to the 2-step RACH is not received, the terminal may not increase the power ramping counter and/or the PRACH retransmission counter value. Alternatively, the terminal may assume that the RACH process itself is not triggered/started from the perspective of terminal operation. This is because when the base station turns off the corresponding SSB index, not only the TX chain but also the RX chain in the corresponding beam direction may be deactivated, which may result in a situation where reception of the corresponding PRACH at the base station fails.

According to one embodiment, if the terminal receives information indicating that a specific SSB index is turned off after a PRACH transmission corresponding to the specific SSB index, the terminal may control the MSGB window as in the following options:

Option A: The terminal may terminate the MSGB window at the time of receiving information indicating that the corresponding SSB index is turned off and attempt to retransmit the MSGA including the PRACH. That is, the terminal may recognize that the MSGB corresponding to the transmitted MSGA will not be received and may quickly terminate the MSGB window, thereby minimizing the latency of the random access procedure.

Option B: The terminal may hold the MSGB window by considering that the on/off of the SSB is dynamically changed. That is, the terminal may hold the MSGB window until information indicating that the corresponding SSB is turned on is received.

Option C: The terminal may increase the MSGB window by X times, by considering the dynamic change of the on/off of the SSB.

Depending on how often the SSBs are turned on/off, which of the above-described options is more efficient for the random access procedure may vary. Therefore, which of the above-described options to use may be set by the base station.

There may be a case where the SSB changes from the OFF state to the ON state during the random access procedure. For example, after the terminal transmits the PRACH corresponding to the SSB index 1, the terminal may receive information indicating that the SSB index 2 is turned on at the time of transmitting the msg3 PUSCH. For example, the on information of the SSB index 2 may be received in the same manner as described in [Embodiment #1] described above. In this case, the terminal may attempt to transmit the msg3 PUSCH using the PO corresponding to the SSB index 2. That is, the terminal may transmit the msg3 PUSCH using the resource corresponding to the SSB index 2, not the resource linked to the previously transmitted PRACH. In order to increase the success probability of the msg3 PUSCH, the base station may signal the SSB index value corresponding to the msg3 PUSCH through the RAR.

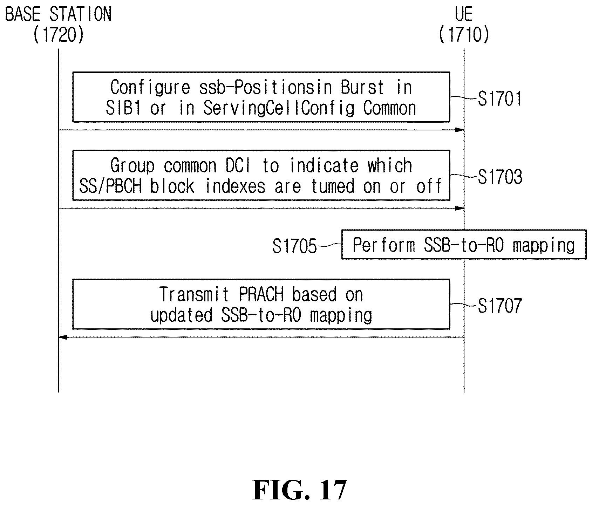

FIG. 17 illustrates an example of a RACH procedure based on an SSB that is dynamically turned on/off in a wireless communication system according to an embodiment of the present disclosure.

Referring to FIG. 17, in step S1701, a base station 1720 configures information about actually transmitted SSB indexes through SIB1 or cell-common RRC signaling. The cell-common RRC signaling may include ServingCellCong-Common. For example, the base station 1720 may configure information about actually transmitted SSB indexes using ssb-PositionsInBurst in SIB1 or ServingCellCongCommon.

In step S1703, the base station 1720 dynamically signals on/off information of the SSB index using the group-common DCI or the group-common MAC CE. For example, the base station 1720 may signal on/off information of the updated SSB index using the group-common DCI or the group-common MAC CE, as proposed in [Embodiment #1].

In step S1705, a UE 1710 performs SSB-to-RO mapping based on signaling of the base station 1720. For example, the UE 1710 may perform SSB-to-RO mapping based on SIB1 or cell-common RRC signaling, and then re-perform SSB-to-RO mapping based on on/off information of each SSB index updated through group-common DCI or group-common MAC CE.

In step S1707, the UE 1710 performs PRACH transmission based on SSB-to-RO mapping. For example, the UE 1710 determines RACH resources based on SSB-to-RO mapping and transmits a RACH preamble using the determined RACH resources.

[Embodiment #3] RLM (radio link monitoring)/CBD (candidate beam detection)/BFD (beam failure detection)/mobility management

When performing an RLM and/or link recovery procedure, the terminal may receive a configuration for a specific RS and determine whether a radio link failure (RLF) or beam failure detection (BFD) occurs based on the RS. For example, the specific RS may include an SSB index, a CSI-RS resource configuration index, or a TCI state index.

If the configuration for the corresponding RS is not received, the terminal may determine the RS according to a predefined rule. For example, the predefined rule may include a rule for an association between the TCI state set in CORESET and the RSs.

If SSB index #n is updated to the off state while the terminal performs RLM, CBD, BFD, and/or mobility management based on SSB index #n, a problem may occur in performing the RLM, CBD, BFD, and/or mobility management operations of the terminal. Here, the terminal may recognize that SSB index #n is updated to the off state by the method proposed in [Embodiment #1] described above. The operation of the terminal accordingly is as follows.

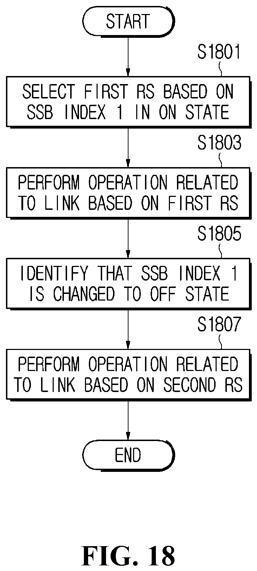

FIG. 18 illustrates an example of a procedure for performing a designated operation based on SSB on/off information in a wireless communication system according to an embodiment of the present disclosure. FIG. 18 illustrates an operation method of a terminal.

Referring to FIG. 18, in step S1801, the terminal selects a first RS based on SSB index 1 in the on state. For example, the terminal may receive an SSB having index 1 among the SSB indexes in the on state, and select the first RS corresponding to the SSB index 1 based on a predefined rule. Here, the predefined rule may define an association between the SSB indexes and the RSs.

In step S1803, the terminal performs an operation related to a link based on the first RS. For example, the operation related to the link may include at least one of RLM, CBD, BFD, or mobility management.

In step S1805, the terminal identifies that the SSB index 1 is changed to the off state. For example, the terminal may receive off information of the SSB index 1 while performing a designated operation.

In step S1807, the terminal performs an operation related to the link based on a second RS. For example, the operation related to the link may include at least one of RLM, CBD, BFD, or mobility management. That is, upon identifying that the SSB index 1 corresponding to the first RS is turned off, the terminal replaces the first RS with the second RS. At this time, the second RS for replacing the first RS may be set in advance or defined in advance.

Specifically, the following alternatives may be used.

According to Alternative 3-1, the base station may configure multiple RS sets in advance, and the terminal may determine which RS set to perform RLM, CBD, BFD and/or mobility management according to the on/off information of the SSBs. Here, the on/off information of the SSBs may include or be replaced with the validity of the CSI-RS resource or the on/off information of the TRP. At this time, the validity of the CSI-RS resource may be directly signaled for each CSI-RS resource, or may be determined by on/off signaling for all or some of the linked antenna ports. In addition, when the terminal receives signals from multiple TRPs, on/off of each TRP may be signaled.

For example, for RLM, CBD, BFD, and/or mobility management operations, the terminal may receive configuration information of RS set #1 and RS set #2 in advance, and perform RLM, CBD, BFD, and/or mobility management operations based on RS set #1 when SSB #n is in the on state, and perform RLM, CBD, BFD, and/or mobility operations based on RS set #2 when SSB #n is in the off state.

According to Alternative 3-1, when performing RLM or BFD, the RLM or BFD operation may be performed based on how often an event corresponding to RLF or beam failure occurs during a certain timer period. For example, while performing an RLM or BFD operation based on the current SSB index #n, if information indicating that the corresponding SSB index #n is turned off is received, the terminal may hold the corresponding timer value, and when the corresponding SSB index #n is turned on again, the terminal may resume the corresponding timer.

Depending on how often the SSBs are turned on/off, which of the above-described alternatives is more efficient may vary. Therefore, which of the above-described alternatives is selected may be set by the base station.

[Embodiment #4] Handover procedure

If a specific SSB index or CSI-RS resource of a target cell is superior in a handover, or a specific SSB index or CSI-RS resource of a serving cell is superior in a contention-free random access (CFRA), a RACH corresponding to the corresponding downlink RS may be set. If it is instructed to transmit a preamble for handover or CFRA purposes in the RACH corresponding to SSB index #n, and information indicating that the corresponding SSB index #n is turned off is received, there may be an issue of how to process the instruction for RACH transmission. In this case, the terminal may perform one of the following options.

Option 1: The terminal may abandon the RACH transmission.

Option 2: The terminal may reattempt the RACH transmission after switching to CBRA (contention-based random access).

Option 3: The terminal may not increase the power ramping counter and/or the RACH retransmission counter even if RAR is not received after the RACH transmission.

[Embodiment #5] Method of determining PDCCH monitoring occasion (MO) corresponding to SIB1/paging/PEI (paging early indication)

As shown in [Table 13] and [Table 14] below, PDCCH MO (monitoring occasion) may be determined based on the *ssb-PositionsInBurst* information set via SIB1. This is especially true when *SearchSpaceId* is not 0. [Table 13] below shows a part of TS 38.304.

[Table 13]

| |
|---|
| The PDCCH monitoring occasions for paging are determined according to pagingSearchSpace as specified in TS 38.213 [4] and firstPDCCH-MonitoringOccasionOfPO and nrofPDCCH-MonitoringOccasionPerSSB-InPO if configured as specified in TS 38.331 [3]. When SearchSpaceId = 0 is configured for pagingSearchSpace, the PDCCH monitoring occasions for paging are same as for RMSI as defined in clause 13 in TS 38.213 [4]. |
| When SearchSpaceId = 0 is configured for pagingSearchSpace, Ns is either 1 or 2. For Ns = 1, there is only one PO which starts from the first PDCCH monitoring occasion for paging in the PF. For Ns = 2, PO is either in the first half frame (i_s = 0) or the second half frame (i_s = 1) of the PF. |
| When SearchSpaceId other than 0 is configured for pagingSearchSpace, the UE monitors the $(i\_s + 1)^{th}$ PO. A PO is a set of 'S*X' consecutive PDCCH monitoring occasions where 'S' is the number of actual transmitted SSBs determined according to ssb-PositionsInBurst in SIB1 and X is the nrofPDCCH-MonitoringOccasionPerSSB-InPO if configured or is equal to 1 otherwise. The $[x*S+K]^{th}$ PDCCH monitoring occasion for paging in the PO corresponds to the Kth transmitted SSB, where x=0,1,...,X-1, K=1,2,...,S. The PDCCH monitoring occasions for paging which do not overlap with UL symbols (determined according to tdd-UL-DL-ConfigurationCommon) are sequentially numbered from zero starting from the first PDCCH monitoring occasion for paging in the PF. When firstPDCCH-MonitoringOccasionOfPO is present, the starting PDCCH monitoring occasion number of $(i\_s + 1)^{th}$ PO is the $(i\_s + 1)^{th}$ value of the firstPDCCH-MonitoringOccasionOfPO parameter; otherwise, it is equal to i_s * S*X. If X > 1, when the UE detects a PDCCH transmission addressed to P-RNTI within its PO, the UE is not required to monitor the subsequent PDCCH monitoring occasions for this PO. |
| <omitted> |
| The PDCCH monitoring occasions for PEI are determined as specified in TS 38.213 [4] according to pei-SearchSpace, pei-FrameOffset, firstPDCCH-MonitoringOccasionOfPEI-O and nrofPDCCH-MonitoringOccasionPerSSB-InPO if configured as specified in TS 38.331 [3]. When SearchSpaceId = 0 is configured for pei-SearchSpace, the PDCCH monitoring occasions for PEI are same as for RMSI as defined in clause 13 in TS 38.213 [4]. UE determines first PDCCH MO for PEI-O based on pei-FrameOffset and firstPDCCH-MonitoringOccasionOfPEI-O, as for the case with SearchSpaceId > 0 configured. |
| When SearchSpaceId = 0 is configured for pei-SearchSpace, the UE monitors the PEI-O according to searchSpaceZero. When SearchSpaceId other than 0 is configured for pei-SearchSpace, the UE monitors the PEI-O according to the search space of the configured SearchSpaceId. |
| A PEI occasion is a set of 'S*X' consecutive PDCCH monitoring occasions, where 'S' is the number of actual transmitted SSBs determined according to ssb-PositionsInBurst in SIB1, and X is the nrofPDCCH-MonitoringOccasionPerSSB-InPO if configured or is equal to 1 otherwise. The $[x*S+K]^{th}$ PDCCH monitoring occasion for PEI in the PEI occasion corresponds to the $K^{th}$ transmitted SSB, where x=0,1,...,X-1, K=1,2,...,S. The PDCCH monitoring occasions for PEI which do not overlap with UL symbols (determined according to tdd-UL-DL-ConfigurationCommon) are sequentially numbered from zero starting from the first PDCCH monitoring occasion for PEI in the PEI-O. When the UE detects a PEI within its PEI-O, the UE is not required to monitor the subsequent monitoring occasion(s) associated with the same PEI-O. |

[Table 14] below shows part of TS 38.304.

[Table 14]

For SI message acquisition PDCCH monitoring occasion(s) are determined according to searchSpaceOtherSystemInformation. If searchSpaceOtherSystemInformation is set to zero, PDCCH monitoring occasions for SI message reception in SI-window are same as PDCCH monitoring occasions for SIB1 where the mapping between PDCCH monitoring occasions and SSBs is specified in TS 38.213[13]. If searchSpaceOtherSystemInformation is not set to zero, PDCCH monitoring occasions for SI message are determined based on search space indicated by searchSpaceOtherSystemInformation. PDCCH monitoring occasions for SI message which are not overlapping with UL symbols (determined according to tdd-UL-DL-ConfigurationCommon) are sequentially numbered from one in the SI window. The $[x \times N+K]^{th}$ PDCCH monitoring occasion (s) for SI message in SI-window corresponds to the $K^{th}$ transmitted SSB, where x = 0, 1, ...X-1, K = 1, 2, ...N, N is the number of actual transmitted SSBs determined according to ssb-PositionsInBurst in SIB1 and X is equal to CEIL(number of PDCCH monitoring occasions in SI-window/N). The actual transmitted SSBs are sequentially numbered from one in ascending order of their SSB indices. The UE assumes that, in the SI window, PDCCH for an SI message is transmitted in at least one PDCCH monitoring occasion corresponding to each transmitted SSB and thus the selection of SSB for the reception SI messages is up to UE implementation.

As described in [Embodiment #1], when on/off information of a specific SSB index is updated through DCI, PDSCH, or MAC CE, SSB-to-MO mapping may be performed by considering the updated on/off information. In this case, the operation of the terminal is as follows.

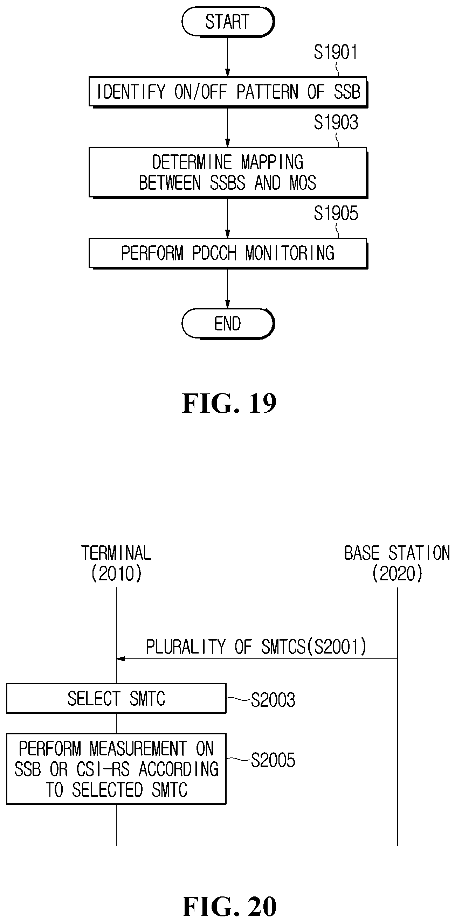

FIG. 19 illustrates an example of a procedure for controlling a PDCCH MO based on SSB on/off information in a wireless communication system according to an embodiment of the present disclosure. FIG. 19 illustrates an operation method of a terminal.

Referring to FIG. 19, in step S1901, the terminal identifies an on/off pattern of an SSB. The on/off pattern of the SSB may be identified according to various embodiments described above. Specifically, the terminal may identify the on/off pattern of the SSB based on signaling from a base station.

In step S1903, the terminal determines the mapping between the SSBs and the MOs. Each of the SSBs transmitted from the base station is associated with at least one MO, and the terminal performs SIB reception, paging, or PDCCH monitoring for PEI in the MO associated with the detected SSB. According to various embodiments, since the indexes of the transmitted SSBs may change by controlling the on/off pattern of the SSB, the terminal may reconfigure the mapping relationship between the at least one SSB in the on state and the MOs based on the on/off pattern of the SSB. For the reconfiguration of the mapping relationship between the SSBs and the MOs, according to one embodiment, the terminal may newly define the mapping with all the MOs according to the at least one SSB in the on state. According to another embodiment, the terminal may treat at least one MO associated with at least one SSB in the off state as invalid or as associated with another SSB in the on state.

In step S1905, the terminal performs PDCCH monitoring. Specifically, the terminal may detect the SSB and perform PDCCH monitoring in the MO associated with the detected SSB.

Specifically, the SSB-to-MO mapping may follow at least one of the following alternatives.

According to Alternative 5-1, the terminal may re-perform SSB-to-MO mapping using only the SSB indexes that are in the on state based on the SSB indexes whose on/off information is updated. That is, the X value of [Table 13] and/or the N value of [Table 14] may be updated through the on/off information as described in [Embodiment #1]. For example, if the number of actually transmitted SSB indexes determined based on the *ssb-PositionsInBurst* information configured via SIB1 is 4, and one of the SSB indexes being turned off is signaled via DCI or PDSCH as described in [Embodiment #1], the X value of [Table 12] and/or the N value of [Table 13] may be 3.

According to Alternative 5-2, the terminal may maintain the SSB-to-MO mapping based on the *ssb-PositionsInBurst* information configured via the existing SIB1, and treat the MO(s) corresponding to the SSB index(es) in the off state as invalid based on the updated on/off information. Alternatively, the terminal may not treat the MO(s) corresponding to the SSB index(es) in the off state as invalid, but may treat them as corresponding to the SSB index mapped near the MO. For example, assume a case where MO#1 is linked to SSB index 1 and MO#2 is linked to SSB index 2. In this case, if SSB index 2 is changed to the off state by DCI, the terminal may treat MO#2 as invalid, or treat MO#2 as being linked with SSB index 1.

In applying the above-described alternatives, the number of MOs may also be changed based on the number of SSB indexes in the on state. For example, if the number of MOs is reduced as much as the number of SSB indexes in the on state is reduced, the energy saving effect of the base station may be maximized. Specifically, it is configured that K SSB indexes in SIB1 are actually transmitted, and the number of PDCCH monitoring occasions in SI-window or *nrofPDCCH-MonitoringOccasionPerSSB-InPO* may be set to N by cell-common RRC signaling such as system information. If it is indicated that K/2 of the K SSB indexes are turned off via DCI, the number of PDCCH monitoring occasions in SI-window or *nrofPDCCH-MonitoringOccasionPerSSB-InPO* may also be reduced to N/2. At this time, N/2 MOs out of N MOs may be determined according to a predetermined rule or pre-configuration of the base station. For example, the predefined rule may include a rule that treats the preceding N/2 out of N slots in a frame as valid, or a rule that treats one MO out of two consecutive MOs as valid and treats the next MO as invalid.

[Embodiment #6] A method of performing SSB and/or CSI-RS related procedures (e.g., procedures for mobility) through SMTC (SSB measurement timing configuration)

For RRM measurement, a terminal may receive an SMTC from a base station. The SMTC includes timing information about a periodicity and/or an offset, and the terminal may perform measurements for SSB and/or CSI-RS of at least one cell during a set time. At this time, an index of SSB or CSI-RS resource information for performing measurements for SSB and/or CSI-RS of at least one cell may be configured together.

FIG. 20 illustrates an example of a procedure for measuring an SSB based on an SMTC in a wireless communication system according to an embodiment of the present disclosure. FIG. 20 illustrates signaling between a base station and a terminal and an operation according to the signaling.

Referring to FIG. 20, in step S2001, the terminal receives a plurality of SMTCs from the base station. Each of the plurality of SMTCs may include timing information for a period and/or offset to be used for measurement of the SSB and/or CSI-RS of at least one cell.

In step S2003, the terminal selects one SMTC from among the plurality of SMTCs. The terminal selects one SMTC from among the plurality of SMTCs based on at least one of the NES state, the DRX configuration, or the active time of the base station. For example, in the NES state, the terminal may select a first SMTC from among the plurality of SMTCs, and in the non-NES state, the terminal may select a second SMTC from among the plurality of SMTCs. As another example, when the cell DTX/DRX is configured, the terminal may select the first SMTC from among the plurality of SMTCs, and when the UE-specific DRX is configured, the terminal may select the second SMTC from among the plurality of SMTCs. As another example, when it is the active time of the base station, the terminal may select the first SMTC from among the plurality of SMTCs, and when it is not the active time of the base station, the terminal may select the second SMTC from among the plurality of SMTCs.

In step S2005, the terminal performs measurement on SSB or CSI-RS according to the selected SMTC. For example, the terminal may measure SSB or CSI-RS based on timing information about the period and/or offset of the selected SMTC.

According to one embodiment, the terminal may receive two or more SMTCs, and perform an SMTC operation after identifying whether or not it is a NES state according to the above-described embodiments, or after determining which NES state it is. For example, if SMTC_A and SMTC_B are set, a rule may be defined to apply SMTC_A if it is a NES state, and apply SMTC_B if it is not a NES state. In this case, by setting SMTC_A to have a longer period than SMTC_B, the power of the base station may be saved.

According to another embodiment, the base station may set multiple candidate values for timing information such as periodicity for one SMTC, or set multiple sets for SSB index or CSI-RS resource information to be measured. In addition, the terminal may perform measurement using a corresponding parameter set depending on whether or not it is the NES state or which NES state it is. For example, for one SMTC, if {0, 1} is set as SSB index set A and {0, 1, 2, 3} is set as SSB index set B, the terminal may apply SSB index set A if it is the NES state and perform measurement based on it, or apply SSB index set B if it is not the NES state and perform measurement based on it. Conversely, the terminal may apply SSB index set B if it is the NES state and perform measurement based on it, or apply SSB index set A if it is not the NES state and perform measurement based on it.

As another example, for one SMTC, if multiple CSI-RS sets (e.g., CSI-RS sets #1/#2/#3/#4) are configured, the terminal may apply CSI-RS set #1 if it is not the NES state, apply CSI-RS set #2 if it is NES state #0, apply CSI-RS set #3 if it is NES state #1, and apply CSI-RS set #4 if it is NES state #2, and perform measurement. Here, the correspondence between NES states and CSI-RS sets may be defined in advance or configured.

Alternatively, the terminal may receive the plurality of SMTCs and perform one of different SMTC operations depending on an activated DRX configuration or whether it is an active time of the base station. In the present disclosure, the DRX configuration may be a DRX configuration configured for an idle/inactive terminal, a C-DRX configuration configured for a connected terminal, or a configuration including a DTX and/or DRX pattern of the base station in a cell-specific or UE group-common manner (hereinafter referred to as 'cell DTX/DRX'). In addition, the active time of the base station may mean an on-duration in the DRX configuration, a period during which an inactivity timer is running, and/or a period during which DL/UL signal transmission and reception of the base station may be expected. For example, if SMTC_A and SMTC_B are configured, a rule may be defined to apply SMTC_A when it is not the active time of the base station, and apply SMTC_B when it is the active time of the base station. In this case, power saving of the base station is possible by setting SMTC_A to have a longer period than SMTC_B. For another example, a rule may be defined to apply SMTC_A when cell DTX/DRX is configured/indicated, and apply SMTC_B when UE-specific DRX is configured/indicated.

According to another embodiment, the base station may set multiple candidate values for timing information such as a period for one SMTC, or set multiple sets for SSB index or CSI-RS resource information to be measured. In addition, the terminal may apply one of different parameter sets depending on the activated DRX configuration or whether it is the active time of the base station, and perform measurement. For example, for one SMTC, if SSB index set A is set to {0, 1} and SSB index set B is set to {0, 1, 2, 3}, the terminal may apply SSB index set A if it is not the active time of the base station, and apply SSB index set B if it is the active time of the base station, and perform measurement. Conversely, the terminal may apply SSB index set B if it is not the active time of the base station, and apply SSB index set A if it is the active time of the base station, and perform measurement. For another example, the terminal may apply SSB index set A when cell DTX/DRX is configured/indicated, apply SSB index set B when UE-specific DRX configuration is configured/indicated, and perform measurements. Conversely, the terminal may apply SSB index set B when cell DTX/DRX is configured/indicated, and apply SSB index set A when UE-specific DRX configuration is configured/indicated, and perform measurements.

Meanwhile, when DRX is configured, the terminal may assume that the base station does not transmit a downlink signal such as SSB during a period that is not the active time of the base station. This is to minimize the power consumption of the base station during a period that is not the active time. However, since it is difficult for the terminal to obtain time/frequency synchronization and/or perform RRM measurement through the SSB during the period, stable network connection may not be easy. Considering this, the terminal may expect to receive a downlink signal for measurement purposes, including SSB, during a period set as SMTC, even if it is a period that is not the active time of the base station.

Alternatively, depending on which DRX is configured and/or indicated, the terminal assumption for SMTC during the period that is not the active time of the base station may be different. That is, if DRX configuration #1 is configured/indicated, downlink signal reception for measurement purposes including SSB may be expected in the SMTC during the period that is not the active time of the base station, whereas if DRX configuration #2 is configured/indicated, downlink signal reception may not be expected even in the SMTC during the period that is not the active time of the base station. In this case, DRX configuration #2 may be a cell DTX/DRX configuration.

[Embodiment #7] A method of setting a plurality of SSB-related parameters and interpreting SSB-related parameters received from a corresponding serving cell differently according to the capability of a terminal

The SSB-related parameters may include at least one of an SSB period or a transmitted SSB index. In an NR system, the period value of the SSB may be set cell-specifically through the *ssb-periodicityServingCell* parameter. For example, if the period value of the SSB is set to 20 msec, if the on/off or power value is changed by SSB index or SSB index group as in [Embodiment #1] described above, it is difficult for an existing terminal that does not have the capability to recognize the change in the configuration to expect stable reception of the SSB even if it accesses the cell. Considering the operation of such an existing terminal, it is possible to set the on/off or power value differently for the SSB transmitted outside the corresponding period in the state of setting the period value of the SSB to 160 msec. However, there is a disadvantage in that actual period information of the SSB cannot be provided even to a terminal that has the capability to recognize such a change.

Hereinafter, for convenience of description, a terminal having the capability to recognize that a transmission pattern such as on/off of an SSB index or index group periodically changes or that a power value changes according to SSB index or index group is referred to as an 'NES-capable terminal'. To solve this, considering an NES-capable terminal and a terminal that does not have such a capability (hereinafter referred to as a 'non-NES-capable terminal'), according to one embodiment, the SSB period may be set using a separate different parameter. That is, in addition to the period value of the SSB set via the *ssb-periodicityServingCell* parameter (hereinafter referred to as 'period#1'), the period value of the SSB (hereinafter referred to as 'period#2') may be set using a separate RRC parameter. The existing SSB period value, period#1, may be set for a non-NES-capable terminal, and the period#2 value may be set in addition to period#1 for a NES-capable terminal. Here, Period#2 may be a smaller value than Period#1. For the NES-capable terminal, the SSB is transmitted according to Period#2, and on/off and/or power control may be applied according to SSB index or index group by the same method as in [Embodiment #1] described above. Additionally, the NES-capable terminal may assume and/or expect that SSB indexes set semi-statically as before are transmitted for SSBs transmitted according to Period#1.

As discussed in TS 38.331 above, whether or not to transmit the SSB index(es) may be signaled semi-statically via a bitmap per SSB index or per group of indexes (e.g., *ssb-PositionsInBurst* in SIB1 or in *ServingCellConfigCommon*). As a motivation similar to the SSB cycle, the corresponding bitmap information may be set as separate different parameters for the NES-capable terminal and the non-NSE-capable terminal. That is, in addition to information on transmission per SSB index or SSB index group (hereinafter referred to as 'bitmap #1') set via the *ssb-PositionsInBurst* parameter as before, the information on transmission per SSB index or index group (hereinafter referred to as "bitmap #2') may be set via a separate RRC parameter. For the non-NES-capable terminal, bitmap #1 may be set, and for the NES-capable terminal, bitmap #2 may be set in addition to the existing bitmap #1. Here, bitmap #2 may carry more '1' information than bitmap #1. For the NES-capable terminal, SSBs may be transmitted based on bitmap #2, and according to the method as in [Embodiment #1] described above, for at least some of SSB indexes or group indexes based on bitmap #2, on/off may vary according to the SSB index or index group. Additionally, the NES-capable terminal may assume and/or expect that SSB indexes are transmitted semi-statically as before for SSB indexes based on bitmap #1.

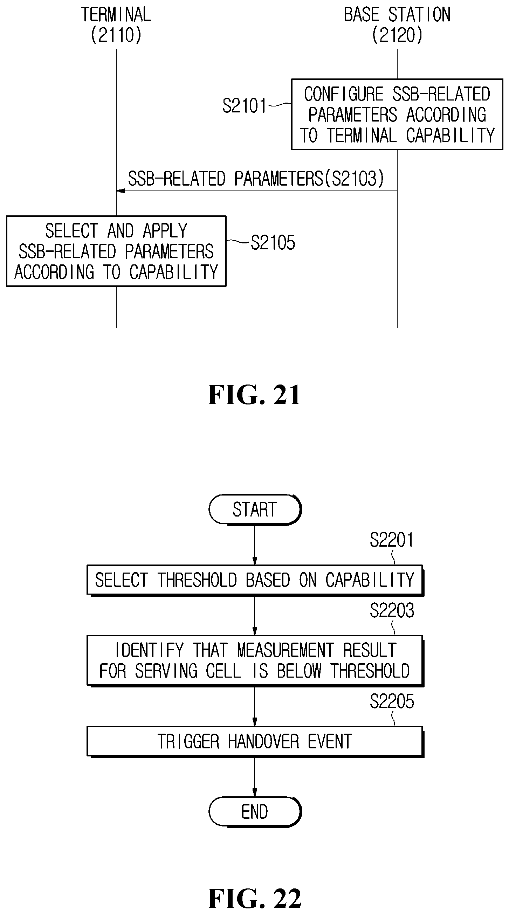

FIG. 21 illustrates an example of a procedure for setting SSB-related parameters according to terminal capability in a wireless communication system according to an embodiment of the present disclosure. FIG. 21 illustrates signaling between a base station and a terminal and an operation according to the signaling.

Referring to FIG. 21, in step S2101, the base station 2120 configures SSB-related parameters according to terminal capability. That is, the base station 2120 sets SSB-related parameters for a non-NSE-capable terminal and SSB-related parameters for an NES-capable terminal. The SSB-related parameters include at least one of an SSB period or a transmitted SSB index.

In step S2103, the base station 2120 transmits the SSB-related parameters to the terminal 2110. The base station 2120 may transmit the SSB-related parameters according to terminal capability to the terminal 2110 using the existing ssb-periodicityServingCell parameter or a separate RRC parameter.

In step S2105, the terminal 2110 selects and applies the SSB-related parameters according to its capability. For example, in the case of the non-NES-capable terminal, the terminal 2110 may select and apply the SSB-related parameters for the non-NES-capable terminal, and the terminal 2110 may select and apply the SSB-related parameters for the NES-capable terminal.

[Embodiment #8] Method of controlling cell selection or random access operation by giving different threshold and/or offset values between NES-capable terminal and non-NES-capable terminal

In events A1/A2/A3/A4/A5/A6 etc. defined in section 5.5.4 of TS 38.331, a mobility related operation such as handover or cell (re)selection may be performed if an offset is given to the measurement results of a serving cell and/or a neighbor cell or a condition is satisfied through comparison with a threshold. In this case, different offset values or thresholds may be set for the NES-capable terminal and the non-NES-capable terminal.

For example, if the measurement result for the serving cell is equal to or less than a certain threshold, a handover event may be triggered. At this time, the threshold #1 value may be applied to the NES-capable terminal, and the threshold #2 value may be applied to the non-NES-capable terminal. If the on/off and/or power value of the SSB may be changed, the base station may set the threshold #1 > threshold #2, thereby reducing the probability that the handover event of the non-NES-capable terminal is triggered even if the base station does not transmit some SSBs for NES purposes or transmits some SSBs at low power.

In addition, during the random access process, operations such as selection of one of the best SSB or CSI-RS, selection of one of the 2-step or 4-step procedures, or selection of one of the NUL or SUL may be performed based on thresholds (e.g., *rsrp-thresholdSSB*, *rsrp-thresholdCSI-RS, msgA-RSRP-thresholdSSB*, *rsrp-thresholdSSB-SUL*, *msgA-RSRP-threshold, rsrp-thresholdMsg3).* All or some of the thresholds may be set to different values for the NES-capable terminal and the non-NES-capable terminal. For example, if the RSRP measurement result for a specific SSB index is equal to or greater than a specific threshold, a PRACH preamble in an RO (RACH occasion) corresponding to the SSB index may be transmitted. At this time, the threshold #1 value may be applied to the NES-capable terminal, and the threshold #2 value may be applied to the non-NES-capable terminal. If the on/off and/or power value of the SSB may be changed, the base station may increase the transmission probability of the RO and PRACH preamble corresponding to the SSB index of the non-NES-capable terminal by setting the threshold #1 > threshold #2, even if the base station does not transmit some SSBs for NES purposes or transmits them at low power.

FIG. 22 illustrates an example of a procedure for controlling a threshold related to mobility according to terminal capability in a wireless communication system according to an embodiment of the present disclosure. FIG. 22 illustrates an operation method of a terminal.

Referring to FIG. 22, in step S2201, the terminal selects a threshold based on the capability of the terminal. The threshold may be a threshold for a measurement result of a serving cell and/or a neighbor cell during a mobility operation such as a handover or cell reselection. For example, in the case of an NSE-capable terminal, the terminal may select a first threshold corresponding to the NSE-capable terminal, and in the case of a non-NES-capable terminal, the terminal may select a second threshold corresponding to a non-NSE-capable terminal. In this case, the second threshold corresponding to the non-NES-capable terminal may be set to have a smaller value than the first threshold corresponding to the NES-capable terminal.

In step S2203, the terminal identifies that the measurement result for the serving cell is below the selected threshold. For example, the terminal may determine whether the measurement result for the serving cell is below the selected threshold by comparing the measurement result for the serving cell with the selected threshold.

In step S2205, the terminal triggers a handover event. That is, if the measurement result for the serving cell is below the selected threshold, the terminal may trigger a handover event. Although not shown in FIG. 22, if the measurement result is not below the selected threshold, the terminal may terminate this procedure or perform the measurement again.

In the description with reference to FIG. 22, by allowing the non-NES-capable terminal to use lower thresholds than the NES-capable terminal, the probability of a handover event being triggered in the non-NES-capable terminal may be reduced when the base station does not transmit some SSBs for NES or transmits some SSBs at low power.

As described above, the present disclosure enables a base station to dynamically turn on/off SSB(s) for energy saving purposes. The present disclosure proposes signaling methods for dynamically turning on/off SSBs, and proposes an operation method of a terminal for random access, measurement, and/or broadcast data reception.

xamples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method of operating a terminal in a wireless communication system, the method comprising:

   receiving downlink control information (DCI) related to system information;
   obtaining allocation information for receiving the system information based on the DCI;
   receiving the system information based on the allocation information;
   obtaining first information related to positions of synchronization signal/physical broadcast channel blocks (SSBs) included in the system information;
   receiving second information related to on or off of the SSBs; and
   receiving at least one of the SSBs based on the first information and the second information.

2. The method of claim 1, wherein the second information indicates on or off of at least one SSB index corresponding to each bit using values of bits included in a bitmap.

3. The method of claim 2, wherein mapping between the bits included in the bitmap and SSB indexes is determined based on the number of SSBs indicated by the system information and the number of bits.

4. The method of claim 1, wherein the second information indicates off using a power value of a predefined value.

5. The method of claim 1, further comprising:

   identifying at least one SSB index turned off based on the second information,
   wherein the turned-off at least one SSB index includes a plurality of SSB candidate indexes linked to an SSB index that is indicated to be turned off by the second information.

6. The method of claim 1, wherein on or off of the SSBs indicated by the second information is applied from a time point predefined or set through signaling.

7. The method of claim 1, wherein on or off of the SSBs based on the second information is applied based on a network energy saving (NES) state being instructed from a base station.

8. The method of claim 1, further comprising:

    identifying an on/off pattern of the SSBs based on the second information;
    reconfiguring mapping between the SSBs and random access channel occasions (ROs) based on the on/off pattern of the SSBs; and
    transmitting a random access channel (RACH) preamble in an RO selected based on mapping between the SSBs and the ROs.

9. The method of claim 8, wherein the mapping between the SSBs and the ROs is reconfigured by treating at least one RO linked to at least one SSB index that is turned off as invalid, treating at least one RO linked to at least one SSB index that is turned off as being linked to an SSB index in an on state that is linked to an adjacent RO, or sequentially mapping the remaining SSB indexes excluding at least one SSB index that is turned off to the ROs.

10. The method of claim 1, further comprising:

    performing an operation related to a link using a first reference signal (RS) based on an SSB of a first index being received; and
    performing the operation related to the link using a second RS instead of the first RS based on the SSB of the first index being turned off,
    wherein the operation related to the link includes one of radio link monitoring (RLM), candidate beam detection (CBD), beam failure detection (BFD) or mobility management operation.

11. The method of claim 1, further comprising:

    performing an operation related to a link using a first reference signal (RS) based on an SSB of a first index being received; and
    holding a timer related to the operation related to the link using the first RS based on the SSB of the first index being turned off,
    wherein the operation related to the link includes one of radio link monitoring (RLM), candidate beam detection (CBD), beam failure detection (BFD) or mobility management operation.

12. The method of claim 1, further comprising:

    identifying an on/off pattern of the SSBs based on the second information;
    reconfiguring mapping between the SSBs and physical downlink control channel (PDCCH) monitoring occasions (MOs) based on the on/off pattern of the SSBs; and
    receiving a PDCCH in a PDCCH MO selected based on the mapping between the SSBs and the PDCCH MOs.

13. A method of operating a base station in a wireless communication system, the method comprising:

    transmitting downlink control information (DCI) related to system information;
    transmitting system information including first information related to positions of synchronization signal/physical broadcast channel blocks (SSBs) based on allocation information included in the DCI;
    transmitting second information related to on or off of the SSBs; and
    transmitting at least one of the SSBs based on the first information and the second information.

14. A terminal in a wireless communication system, the terminal comprising:

    a transceiver; and
    a processor connected to the transceiver,
    wherein the processor is configured to:

        receive downlink control information (DCI) related to system information;
        obtain allocation information for receiving the system information based on the DCI;
        receive the system information based on the allocation information;

obtain first information related to positions of synchronization signal/physical broadcast channel blocks (SSBs) included in the system information;
receive second information related to on or off of the SSBs; and
receive at least one of the SSBs based on the first information and the second information.

15. A base station in a wireless communication system, the base station comprising:

a transceiver; and
a processor connected to the transceiver,
wherein the processor is configured to:

transmit downlink control information (DCI) related to system information;
transmit system information including first information related to positions of synchronization signal/physical broadcast channel blocks (SSBs) based on allocation information included in the DCI;
transmit second information related to on or off of the SSBs; and
transmit at least one of the SSBs based on the first information and the second information.

16. A communication device comprising:

at least one processor; and
at least one computer memory connected to the at least one processor and configured to store instructions that direct operations as executed by the at least one processor,
wherein the operations comprise:

receiving downlink control information (DCI) related to system information;
obtaining allocation information for receiving the system information based on the DCI;
receiving the system information based on the allocation information;
obtaining first information related to positions of synchronization signal/physical broadcast channel blocks (SSBs) included in the system information;
receiving second information related to on or off of the SSBs; and
receiving at least one of the SSBs based on the first information and the second information.

17. A non-transitory computer-readable medium storing at least one instructions, the non-transitory computer-readable medium comprising the at least one instructions executable by a processor,
wherein the at least one instruction controls a device to:

receive downlink control information (DCI) related to system information;
obtain allocation information for receiving the system information based on the DCI;
receive the system information based on the allocation information;
obtain first information related to positions of synchronization signal/physical broadcast channel blocks (SSBs) included in the system information;
receive second information related to on or off of the SSBs; and
receive at least one of the SSBs based on the first information and the second information.

**FIG. 1**

200

208

202

206

First Device

Processor(s)

Transceiver(s)

Memory(s)

204

**FIG. 2**

Radio Frame 10ms

Fixed Size

Subframe 1ms

| 0 | 1 | 2 | 3 | 4 | 5 | 6 | 7 | 8 | 9 |

Subframe={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbol

**FIG. 3**

One Subframe

$14 \cdot 2^{\mu}$ OEDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

**FIG. 4**

**FIG. 5**

**FIG. 6**

**FIG. 7**

EP 4 568 361 A1

**FIG. 8**

SSB periodicity(default:20ms)

5ms
window

SSB#1    SSB#2    • • •    SSB#L

SSB busrt set

# FIG. 9

EP 4 568 361 A1

DRS transmission window

| | slot #0 | slot #1 | slot #2 | slot #3 | slot #4 | slot #5 | slot #6 | slot #7 | slot #8 | slot #9 |
|---|---|---|---|---|---|---|---|---|---|---|
| SS/PBCH block candidate position index | 0  1 | 2  3 | 4  5 | 6  7 | 8  9 | 10  11 | 12  13 | 14  15 | 16  17 | 18  19 |
| PBCH DMRS sequence index | 0  1 | 2  3 | 4  5 | 6  7 | 0  1 | 2  3 | 4  5 | 6  7 | 0  1 | 2  3 |
| PBCH payload indication | 0  0 | 0  0 | 0  0 | 0  0 | 1  1 | 1  1 | 1  1 | 1  1 | 2  2 | 2  2 |
| SS/PBCH block index (Q-4) | #0 | #2 | #0 | #2 | #0 | #2 | #0 | #2 | #0 | #2 |

**FIG. 10**

| SFN | | SSB time index | |
|---|---|---|---|
| s9, s8, s7, s6, s5, s4, s3, s2, s1, s0 | c0 | b5, b4, b3 | b2, b1, b0 |

Half frame boundary

← PBCH payload → ← DMRS →

## FIG. 11

START

RECEIVE INFORMATION INDICATING ON/OFF OF SSB — S1201

IDENTIFY AT LEAST ONE SSB THAT IS IN OFF STATE AMONG SSBS — S1203

RECEIVE AT LEAST ONE OF SSBS — S1205

END

## FIG. 12

START

S1301

IDENTIFY AT LEAST ONE SSB CONTROLLED
TO BE IN OFF STATE AMONG SSBS

S1303

TRANSMIT INFORMATION
INDICATING ON/OFF OF SSB

S1305

TRANSMIT SSBS

END

**FIG. 13**

START

S1401

RECEIVE BITMAP RELATED TO SSB

S1403

IDENTIFY ON/OFF INFORMATION OF EACH SSB
INDEX BASED ON BITMAP RELATED TO SSB

S1405

CONTROL APPLICATION TIMING OF ON/OFF
INFORMATION OF EACH SSB INDEX

END

**FIG. 14**

START

S1501

IDENTIFY ON/OFF PATTERN OF SSB

S1503

DETERMINE MAPPING
BETWEEN SSBS AND ROS

S1505

TRANSMIT RACH PREAMBLE

END

## FIG. 15

START

S1601

RECEIVE SSB OF INDEX 1

S1603

TRANSMIT RACH PREAMBLE

S1605

RECEIVE SSB ON/OFF INFORMATION

S1607

PERFORM RACH PROCEDURE
BASED ON ON/OFF INFORMATION

END

## FIG. 16

EP 4 568 361 A1

BASE STATION
(1720)

UE
(1710)

Configure ssb-Positionsin Burst in
SIB1 or in ServingCellConfig Common — S1701

Group common DCI to indicate which
SS/PBCH block indexes are turned on or off — S1703

S1705 — Perform SSB-to-RO mapping

Transmit PRACH based on
updated SSB-to-RO mapping — S1707

**FIG. 17**

START

S1801

SELECT FIRST RS BASED ON
SSB INDEX 1 IN ON STATE

S1803

PERFORM OPERATION RELATED
TO LINK BASED ON FIRST RS

S1805

IDENTIFY THAT SSB INDEX 1
IS CHANGED TO OFF STATE

S1807

PERFORM OPERATION RELATED
TO LINK BASED ON SECOND RS

END

**FIG. 18**

START

IDENTIFY ON/OFF PATTERN OF SSB — S1901

DETERMINE MAPPING
BETWEEN SSBS AND MOS — S1903

PERFORM PDCCH MONITORING — S1905

END

**FIG. 19**

TERMINAL
(2010)

BASE STATION
(2020)

PLURALITY OF SMTCS(S2001)

SELECT SMTC — S2003

PERFORM MEASUREMENT ON
SSB OR CSI-RS ACCORDING
TO SELECTED SMTC — S2005

**FIG. 20**

TERMINAL
(2110)

BASE STATION
(2120)

S2101 — CONFIGURE SSB-RELATED
PARAMETERS ACCORDING
TO TERMINAL CAPABILITY

SSB-RELATED PARAMETERS(S2103)

SELECT AND APPLY
SSB-RELATED PARAMETERS
ACCORDING TO CAPABILITY — S2105

**FIG. 21**

START

S2201
SELECT THRESHOLD BASED ON CAPABILITY

S2203
IDENTIFY THAT MEASUREMENT RESULT
FOR SERVING CELL IS BELOW THRESHOLD

S2205
TRIGGER HANDOVER EVENT

END

**FIG. 22**

## INTERNATIONAL SEARCH REPORT

| International application No. |
| --- |
| **PCT/KR2023/011474** |

**A. CLASSIFICATION OF SUBJECT MATTER**

**H04W 52/02**(2009.01)i; **H04B 7/06**(2006.01)i; **H04W 56/00**(2009.01)i; **H04W 72/23**(2023.01)i; **H04W 74/08**(2009.01)i; **H04W 24/08**(2009.01)i; **H04W 76/28**(2018.01)i; **H04B 7/08**(2006.01)i

According to International Patent Classification (IPC) or to both national classification and IPC

**B. FIELDS SEARCHED**

Minimum documentation searched (classification system followed by classification symbols)

H04W 52/02(2009.01); H04W 24/10(2009.01); H04W 36/00(2009.01); H04W 48/20(2009.01); H04W 56/00(2009.01); H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 시스템 (system), 온-오프 (on-off), 제어 (control), 정보 (information), DCI (downlink control information)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021-226901 A1 (APPLE INC.) 18 November 2021 (2021-11-18)<br>See paragraphs [0004]-[0043]. | 1-17 |
| A | US 2021-0195513 A1 (QUALCOMM INCORPORATED) 24 June 2021 (2021-06-24)<br>See paragraphs [0088]-[0138]. | 1-17 |
| A | US 2018-0279182 A1 (FUTUREWEI TECHNOLOGIES, INC.) 27 September 2018 (2018-09-27)<br>See claims 1-10. | 1-17 |
| A | KR 10-2021-0019100 A (VIVO MOBILE COMMUNICATION CO., LTD.) 19 February 2021 (2021-02-19)<br>See paragraphs [0041]-[0109]. | 1-17 |
| A | US 2022-0150836 A1 (LG ELECTRONICS INC.) 12 May 2022 (2022-05-12)<br>See claims 1-10. | 1-17 |

☐ Further documents are listed in the continuation of Box C.　　☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **02 November 2023** | **03 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/011474**

| Patent document cited in search report | | | Publication date (day/month/year) | Patent family member(s) | | | Publication date (day/month/year) |
|---|---|---|---|---|---|---|---|
| WO | 2021-226901 | A1 | 18 November 2021 | CN | 115552988 | A | 30 December 2022 |
| | | | | EP | 4136896 | A1 | 22 February 2023 |
| | | | | US | 2023-0073001 | A1 | 09 March 2023 |
| US | 2021-0195513 | A1 | 24 June 2021 | CN | 114830727 | A | 29 July 2022 |
| | | | | EP | 4082244 | A1 | 02 November 2022 |
| | | | | US | 11570706 | B2 | 31 January 2023 |
| | | | | WO | 2021-133930 | A1 | 01 July 2021 |
| | | | | WO | 2021-133930 | A9 | 22 July 2021 |
| US | 2018-0279182 | A1 | 27 September 2018 | CN | 111066292 | A | 24 April 2020 |
| | | | | CN | 111066292 | B | 08 June 2021 |
| | | | | CN | 113473558 | A | 01 October 2021 |
| | | | | CN | 113473558 | B | 06 December 2022 |
| | | | | EP | 3590236 | A1 | 08 January 2020 |
| | | | | US | 10568004 | B2 | 18 February 2020 |
| | | | | WO | 2018-171582 | A1 | 27 September 2018 |
| KR | 10-2021-0019100 | A | 19 February 2021 | CN | 110690950 | A | 14 January 2020 |
| | | | | CN | 110690950 | B | 11 August 2020 |
| | | | | EP | 3820069 | A1 | 12 May 2021 |
| | | | | EP | 3820069 | B1 | 20 September 2023 |
| | | | | EP | 4246865 | A2 | 20 September 2023 |
| | | | | JP | 2021-529495 | A | 28 October 2021 |
| | | | | JP | 7160501 | B2 | 25 October 2022 |
| | | | | SG | 11202100093 | A | 25 February 2021 |
| | | | | US | 11758503 | B2 | 12 September 2023 |
| | | | | US | 2021-0120519 | A1 | 22 April 2021 |
| | | | | WO | 2020-007313 | A1 | 09 January 2020 |
| US | 2022-0150836 | A1 | 12 May 2022 | CN | 114208303 | A | 18 March 2022 |
| | | | | EP | 4007379 | A1 | 01 June 2022 |
| | | | | JP | 2022-542266 | A | 30 September 2022 |
| | | | | KR | 10-2022-0004768 | A | 11 January 2022 |
| | | | | KR | 10-2491083 | B1 | 26 January 2023 |
| | | | | US | 11503547 | B2 | 15 November 2022 |
| | | | | US | 2023-0051303 | A1 | 16 February 2023 |
| | | | | WO | 2021-020838 | A1 | 04 February 2021 |

Form PCT/ISA/210 (patent family annex) (July 2022)